# EUROPEAN PATENT APPLICATION

(11) **EP 2 415 718 A1**
(43) Date of publication of application: **08.02.2012**
(21) Application number: 09842687.7
(22) Date of filing: 23.07.2009
(51) Int. Cl.: C02F 1/74, B01D 53/50, B01D 53/77

(54) **OXIDATION TANK, APPARATUS FOR TREATING SEAWATER, AND SYSTEM FOR DESULFURIZING SEAWATER**

(30) Priority: 31.03.2009 JP 2009087546
(71) Applicant: Mitsubishi Heavy Industries, Ltd., Tokyo 108-8215 (JP)
(72) Inventor: Hiroshi NAKASHOJI, 1-1, Itozaki Minami 1-Chome, Mihara, Hiroshima-ken 676-8686 (JP); Koichiro IWASHITA, 1-1, Itozaki Minami 1-Chome, Mihara, Hiroshima-ken 676-8686 (JP); Toyoshi NAKAGAWA, 1-1, Itozaki Minami 1-Chome, Mihara, Hiroshima-ken 676-8686 (JP); Tomoo AKIYAMA, 717-1, Fukahori-machi 5-chome, Nagasaki, Nagasaki-ken 851-0932 (JP); Hiroshi KAWANE, 1-1, Arai-cho Shinhama 2-chome, Takasago, Hyogo-ken 676-8686 (JP); Takashi KAWANO, 1-1, Arai-cho Shinhama 2-chome, Takasago, Hyogo-ken 676-8686 (JP)
(74) Representative: Intès, Didier Gérard André
(86) International application number: PCT/JP2009/063196
(87) International publication number: WO 2010/113335

(57) **Abstract**

A first oxidation basin (51-1) includes a diffuser tube (52) that supplies air (29) to sulfur-content absorbing seawater produced when a sulfur content contained in a flue gas is brought into contact with seawater to perform seawater desulfurization, and performs a water-quality restoring treatment of the sulfur-content absorbing seawater. The first oxidization basin (51-1) includes an inlet (53) through which the sulfur-content absorbing seawater (16B) flows into the side of the diffuser tube (52) and an outlet (54) through which the sulfur-content absorbing seawater (16C) that is after being brought into contact with the air (29) is discharged. The diffuser tube (52) includes a main tube (61) that supplies the air (29) and an air tube (62) that extends from the main tube (61). The air tube (62) includes a sub tube (62a) that is connected to the main tube (61) and extends in a certain direction, and a plurality of branch tubes (62b) that is connected to the sub tube (62a) and extends in a direction different from the direction in which the sub tube (62a) extends. The branch tubes (62b) are arranged so as to be generally perpendicular to the flow direction of the sulfur-content absorbing seawater (16B).

## Description

### TECHNICAL FIELD

The present invention relates to an oxidation basin, a seawater treatment apparatus, and a seawater desulfurization system provided with a diffuser tube that supplies air to seawater used for desulfurizing sulfur content such as sulfur oxide contained in a flue gas discharged from an industrial combustion facility.

### BACKGROUND ART

In recent years, there has been an increase in the number of thermal power plants in which a seawater desalination plant is installed. A desulfurization apparatus in which sulfur content contained in flue gas produced when fossil fuel such as coal is burned is reduced is also installed in such thermal power plants. A seawater desulfurization technology for desulfurization with the use of seawater as absorbing liquid has attracted attention from the standpoint that power plants and the like are mostly built on the sea to require a large amount of cooling water and also from the standpoint that the running cost for desulfurization is kept low.

Such a flue-gas desulfurization apparatus in which seawater is used as absorbing liquid can keep the costs lower than a lime-gypsum flue-gas desulfurization apparatus. Therefore, the seawater flue-gas desulfurization apparatus is used in a thermal power plant and the like. Furthermore, as cooling water, a large amount of seawater is used in a condenser of a boiler. Therefore, a portion of a heated seawater effluent discharged from the condenser is supplied to the desulfurization apparatus so that the desulfurization apparatus reduces SO₂ from a flue gas.

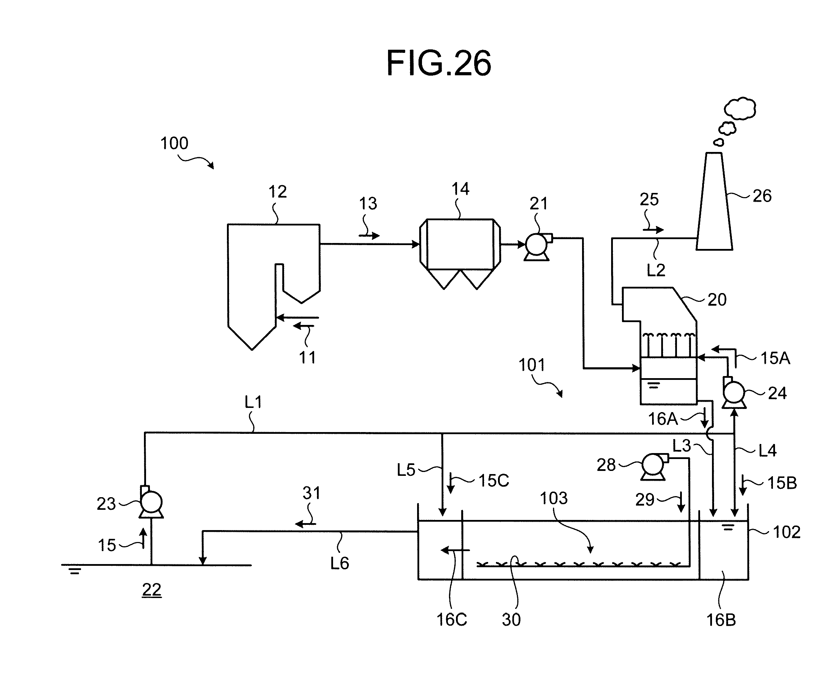

An example of a conventional seawater treatment apparatus in which seawater is used is shown in Fig. 26. Fig. 26 is a schematic of a configuration of a seawater desulfurization system provided with a conventional seawater treatment apparatus in which seawater is used. As shown in Fig. 26, a seawater desulfurization apparatus 100 in which seawater is used includes: a boiler 12 that causes a burner (not shown) to burn fossil fuel with preheated air 11; a dust collecting apparatus 14 that reduces ash dust contained in a flue gas 13 that is produced by heat exchange in the boiler 12 and emitted from the boiler 12; and a seawater desulfurization/oxidation treatment apparatus 101 that reduces a sulfur content contained in the flue gas 13 by absorbing the sulfur content in seawater 15, and performs a water-quality restoring treatment of produced sulfur-content absorbing seawater 16A containing the sulfur content in a high concentration. The seawater desulfurization/oxidation treatment apparatus 101 includes a flue-gas desulfurization absorber 20 and an oxidation basin 102. In the flue-gas desulfurization absorber 20, SO₂ contained in the flue gas 13 is absorbed into the seawater 15, and recovered as sulfurous acid (H₂SO₃) and sulfuric acid (H₂SO₄)- In the oxidation basin 102, a water-quality restoring treatment is performed on the sulfur-content absorbing seawater 16A containing the sulfur content in the high concentration that is discharged from the flue-gas desulfurization absorber 20.

A power generator of a steam turbine is driven to generate electricity by steam that is generated with the use of the flue gas 13 emitted from the boiler 12 as a heat source for the generation of steam.

The flue gas 13 is fed to a flue-gas denitration apparatus (not shown), and is subjected to denitration. After that, the flue-gas 13 is fed to the dust collecting apparatus 14, and ash dust contained in the flue gas 13 is reduced. Then, the flue gas 13 from which the ash dust is reduced by the dust collecting apparatus 14 is supplied into the flue-gas desulfurization absorber 20 by an induction fan 21.

In the flue-gas desulfurization absorber 20, out of the seawater 15 pumped from sea 22 with a pump 23, a portion of the seawater 15 pumped with a pump 24 is used as seawater 15A. The seawater 15A is used for reducing of the sulfur content contained in the flue gas 13. That means the flue gas 13 produced by the combustion of fossil fuel contains the sulfur content that is sulfur oxide (SOx) in the form of SO₂ or the like. In the seawater desulfurization, in the filue-gas desulfurization absorber 20, the flue gas 13 and the seawater 15A supplied through a seawater supply line L1 are brought into gas-liquid contact with each other, which causes a reaction as indicated by the following formula. The desulfurization is performed by absorbing the sulfur content such as sulfur oxide (SOx) contained in the flue gas 13 in the form of sulfurous acid gas (SO₂ or the like into the seawater 15A.

SO₂ + H₂O → HSO₃⁻ + H⁺ (1)

By the gas-liquid contact between the seawater 15A and the flue gas 13, H⁺ is generated. Therefore, after the gas-liquid contact between the seawater 15A and the flue gas 13, a concentration of hydrogen sulfurous ion (HSO₃⁻) in the seawater 15A is increased, and the pH thereof is decreased because the H⁺ is freed. The pH of the sulfur-content absorbing seawater 16A into which a large amount of the sulfur content is absorbed is about 3 to 6. Incidentally, the sulfur-content absorbing seawater is flow-down liquid of the seawater into which the sulfur content is absorbed in the flue-gas desulfurization absorber 20.

Then, a purged gas 25 subjected to desulfurization in the flue-gas desulfurization absorber 20 is released into the atmosphere from a stack 26 through a purged-gas discharge line L2. The sulfur-content absorbing seawater 16A is discharged from the flue-gas desulfurization absorber 20 through a sulfur-content absorbing seawater discharge line L3.

Before being discharged into the sea 22 or reused, the sulfur-content absorbing seawater 16A discharged from the flue-gas desulfurization absorber 20 needs to be reduced in concentration of sulfurous acid to be a COD component, and thereby increasing a pH and a dissolved oxygen level. Therefore, the sulfur-content absorbing seawater 16A containing the sulfur content in the high concentration is supplied to the oxidation basin 102 through the sulfur-content absorbing seawater discharge line L3. Then, as first dilution seawater 15B, a portion of the seawater 15 that is supplied through a seawater supply line L1 is sent through a first seawater branching line L4 to be mixed with the sulfur-content absorbing seawater 16A at the upstream side (the entrance side) of the oxidation basin 102 to dilute the sulfur-content absorbing seawater 16A. The resultant seawater after the sulfur-content absorbing seawater 16A and the first dilution seawater 15B are mixed in the oxidation basin 102 is referred to as sulfur-content absorbing seawater 16B.

The pH of the sulfur-content absorbing seawater 16B is increased and the re-emission of SO₂ in the oxidation basin 102 is prevented, and an oxidation air blower 28 supplies air 29 into the oxidation basin 102 from an oxidation air nozzle 30 through a diffuser tube 103 to bring the air 29 into gas-liquid contact with the sulfur-content absorbing seawater 16B in the oxidation basin 102, which causes reactions as indicated by the following formulas so as to increase the pH and the dissolved oxygen level. The resultant seawater after the air 29 is brought into gas-liquid contact with the sulfur-content absorbing seawater 16B is referred to as sulfur-content absorbing seawater 16C.

HSO₃⁻ + 1/2O₂ → SO₄²⁻ + H⁺ (2)

HCO₃⁻ + H+ → CO₂(g) + H₂O (3)

CO₃²⁻ + 2H⁺ → CO₂(g) + H₂O (4)

After that, the rest of the seawater 15 as a second dilution seawater 15C is sent through a second seawater branching line L5 to be mixed with the sulfur-content absorbing seawater 16C at the downstream side of the oxidation basin 102 to dilute the sulfur-content absorbing seawater 16C so as to restore water quality of the sulfur-content absorbing seawater 16C. Resultant solution after the sulfur-content absorbing seawater 16C is diluted with the second dilution seawater 15C is referred to as water-quality restored seawater 31. The water-quality restored seawater 31 of which water quality is thus restored is discharged from the oxidation basin 102, and discharged as a seawater effluent into the sea 22 through a seawater discharge line L6.

In this manner, in the conventional seawater desulfurization system 100, to achieve the prevention of SO₂ re-emission and the increase in pH of the sulfur-content absorbing seawater in the oxidation basin 102, the sulfur-content absorbing seawater 16A is mixed with the first dilution seawater 15B in the oxidation basin 102 so as to be diluted, and subjected to aeration, thereby oxidizing hydrogen sulfurous acid ion (HSO₃⁻) to render the hydrogen sulfurous acid ion harmless and simultaneously increasing the dissolved oxygen level to produce the sulfur-content absorbing seawater 16C. The sulfur-content absorbing seawater 16C is diluted to increase pH of the sulfur-content absorbing seawater 16C to produce the water-quality restored seawater 31. Then, the water-quality restored seawater 31 is discharged into the sea 22 (see, for example, Patent Documents 1 to 5).

In Patent Document 4, a technology is disclosed in which a plurality of pores is provided on a portion of a tube that is included in the diffuser tube 103, thereby bringing the sulfur-content absorbing seawater 16B in the oxidation basin 102 into contact with the air 29 supplied through the diffuser tube 103.

In the Patent Document 5, a technology is disclosed in which a porous membrane is provided on a surface of the diffuser tube 103, thereby bringing the sulfur-content absorbing seawater 16B in the oxidation basin 102 into contact with the air 29 supplied through the porous membrane provided on the surface of the diffuser tube 103.

Patent Document 1: Japanese Patent Application Laid-open No. 2006-055779
Patent Document 2: Japanese Patent Application Laid-open No. 2007-125474
Patent Document 3: Japanese Patent Application Laid-open No. 2008-155195
Patent Document 4: U.S. Patent No. 4960546
Patent Document 5: U.S. Patent No. 7044453

### DISCLOSURE OF INVENTION

### PROBLEM TO BE SOLVED BY THE INVENTION

In the oxidation basin 102, a large amount of the sulfur-content absorbing seawater 16A supplied thereinto needs to be oxidized, and a large amount of air needs to be supplied thereinto accordingly. Therefore, an oxidation facility cost, a power cost, and the like are increased. Therefore, an oxidation treatment facility is called for in which the air 29 supplied through the diffuser tube 103 can be efficiently brought into contact with the sulfur-content absorbing seawater 16B in the oxidation basin 102.

In view of the foregoing, an object of the present invention is to provide an oxidation basin, a seawater treatment apparatus, and a seawater desulfurization system those capable of efficiently supplying air into seawater used for seawater desulfurization.

### MEANS FOR SOLVING PROBLEM

According to an aspect of the present invention an oxidation basin that includes a diffuser tube that supplies air to a sulfur-content absorbing solution that is produced when sulfur content contained in a flue gas is brought into contact with seawater to perform seawater desulfurization, and performs a water-quality restoring treatment of the sulfur-content absorbing solution, includes: an inlet through which the sulfur-content absorbing solution flows into a side of the diffuser tube; and an outlet through which the sulfur-content absorbing solution flows out after being brought into contact with the air supplied through the diffuser tube. The diffuser tube includes a main tube that supplies the air an air tube that extends from the main tube, the air tube includes a sub tube that is connected to the main tube and extends in a certain direction, and a plurality of branch tubes that is connected to the sub tube and extends in a direction different from the direction in which the sub tube extends, and the branch tubes are arranged so as to be generally perpendicular to a direction in which the sulfur-content absorbing solution flows.

Advantageously, in the oxidation basin, each of the branch tubes includes a tube body and a porous membrane that covers a surface of the tube body.

Advantageously, in the oxidation basin, each of the branch tubes is a flat plate, and has a longitudinal shape whose both ends are rectangular shaped or arc shaped.

Advantageously, in the oxidation basin, a cross section of each of the branch tubes cut perpendicularly to a longitudinal direction of the branch tube is circular shaped.

Advantageously, in the oxidation basin, two or more air tubes are arranged with a predetermined distance therebetween.

Advantageously, in the oxidation basin, the air tubes are arranged in parallel to each other, and the branch tubes of the air tubes are offset to each other.

Advantageously, in the oxidation basin, between the branch tubes on one side, the branch tubes of the diffuser tube on another side next thereto are interleaved.

Advantageously, in the oxidation basin, a partition plate is provided between the diffuser tubes in the oxidation basin.

Advantageously, in the oxidation basin, a weir is provided between the diffuser tubes in the oxidation basin.

Advantageously, in the oxidation basin, the seawater is an effluent discharged from a condenser.

According to another aspect of the present invention, a seawater treatment apparatus includes: a flue-gas desulfurization apparatus that washes a sulfur content contained in a flue gas by bringing the sulfur content into contact with seawater; and the oxidation basin described above.

According to still another aspect of the present invention, a seawater desulfurization system includes: a boiler; a steam turbine that uses a flue gas discharged from the boiler as a heat source for generating steam, and drives a power generator by using the steam thus generated; a condenser that collects water that is condensed in the steam turbine, and circulates the water; a flue-gas denitration apparatus that performs denitration of the flue gas discharged from the boiler; a dust collecting apparatus that reduces ash dust contained in the flue gas; the seawater treatment apparatus above described; and a stack that discharges purged gas that is subjected to desulfurization in the flue-gas desulfurization apparatus outside.

### EFFECT OF THE INVENTION

According to the present invention, a diffuser tube is provided to an oxidation basin in which water-quality restoring treatment of sulfur-content absorbing solution that is produced by the seawater desulfurization of bringing a sulfur content contained in a flue gas into contact with seawater and that supplies air to the oxidation basin and the diffuser tube includes a main tube that supplies air and an air tube that extends from the main tube. The air tube includes a sub tube that is connected to the main tube and extends in a certain direction and a plurality of branch tubes that is connected to the sub tube and extends in a direction different from the direction in which the sub tube extends. Each branch tube is arranged so that the branch tube is generally perpendicular to the flow direction of the sulfur-content absorbing solution. Thus, the flow direction of the sulfur-content absorbing seawater and the longitudinal direction of the air tube are generally perpendicular to each other to facilitate generation of turbulence in the flow of the sulfur-content absorbing seawater. As a result, the air supplied through the air tube and the sulfur-content absorbing seawater can be more efficiently brought into contact with each other, thereby further accelerating the oxidation of the sulfur-content absorbing seawater.

### BRIEF DESCRIPTION OF DRAWINGS

[Fig. 1] Fig. 1 is a schematic of a configuration of a seawater desulfurization system employing a seawater treatment apparatus in which a first oxidation basin according to a first embodiment of the present invention is used.
[Fig. 2] Fig. 2 is a schematic of a configuration of the first oxidation basin according to the first embodiment of the present invention.
[Fig. 3] Fig. 3 is a diagram of a configuration of an air tube.
[Fig. 4] Fig. 4 is a partial enlarged view of a section indicated by the reference character A in Fig. 3.
[Fig. 5] Fig. 5 is a schematic of another configuration of the oxidation basin.
[Fig. 6] Fig. 6 is a schematic of still another configuration of the oxidation basin.
[Fig. 7] Fig. 7 is a diagram of an example of a configuration of an air tube.
[Fig. 8] Fig. 8 is a diagram of another example of the air tube.
[Fig. 9] Fig. 9 is a schematic of a configuration of a second oxidation basin according to a second embodiment of the present invention.
[Fig. 10] Fig. 10 is a schematic of another configuration of the oxidation basin.
[Fig. 11] Fig. 11 is a schematic of still another configuration of the oxidation basin.
[Fig. 12] Fig. 12 is a schematic of another configuration of the second oxidation basin.
[Fig. 13] Fig. 13 is a schematic of still another configuration of the oxidation basin.
[Fig. 14] Fig. 14 is a schematic of still another configuration of the oxidation basin.
[Fig. 15] Fig. 15 is a schematic of a configuration of a third oxidation basin according to a third embodiment of the present invention.
[Fig. 16] Fig. 16 is a schematic of another configuration of the oxidation basin.
[Fig. 17] Fig. 17 is a schematic of still another configuration of the oxidation basin.
[Fig. 18] Fig. 18 is a schematic of a configuration of a fourth oxidation basin according to a fourth embodiment of the present invention.
[Fig. 19] Fig. 19 is a sectional view taken along the line A-A in Fig. 18.
[Fig. 20] Fig. 20 is a schematic of still another configuration of the oxidation basin.
[Fig. 21] Fig. 21 is a schematic of still another configuration of the oxidation basin.
[Fig. 22] Fig. 22 is a schematic of a configuration of a fifth oxidation basin according to a fifth embodiment of the present invention.
[Fig. 23] Fig. 23 is a sectional view taken along the line A-A in Fig. 22.
[Fig. 24] Fig. 24 is a schematic of still another configuration of the oxidation basin.
[Fig. 25] Fig. 25 is a schematic of still another configuration of the oxidation basin.
[Fig. 26] Fig. 26 is a schematic of a configuration of a conventional seawater desulfurization system.

### BEST MODE(S) FOR CARRYING OUT THE INVENTION

The present invention is described in detail with reference to the accompanying drawings. Incidentally, the present invention is not limited to the embodiments described below. Furthermore, elements used in the embodiments described below may include an element that can be easily arrived at by those skilled in the art or an element substantially identical thereto.

### [First embodiment]

A seawater desulfurization system employing a seawater treatment apparatus in which a first oxidation basin according to a first embodiment of the present invention is used is described with reference to drawings.

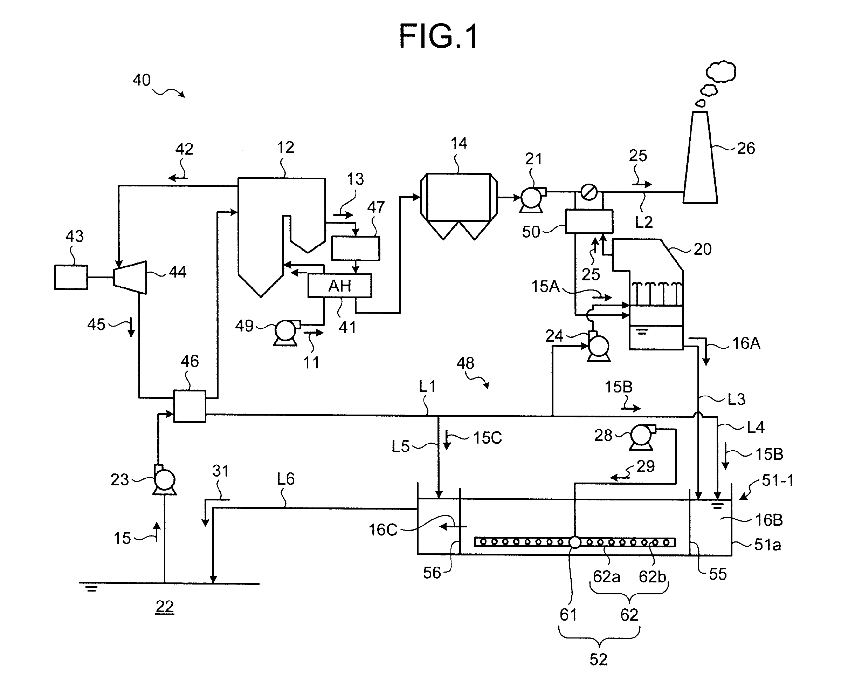

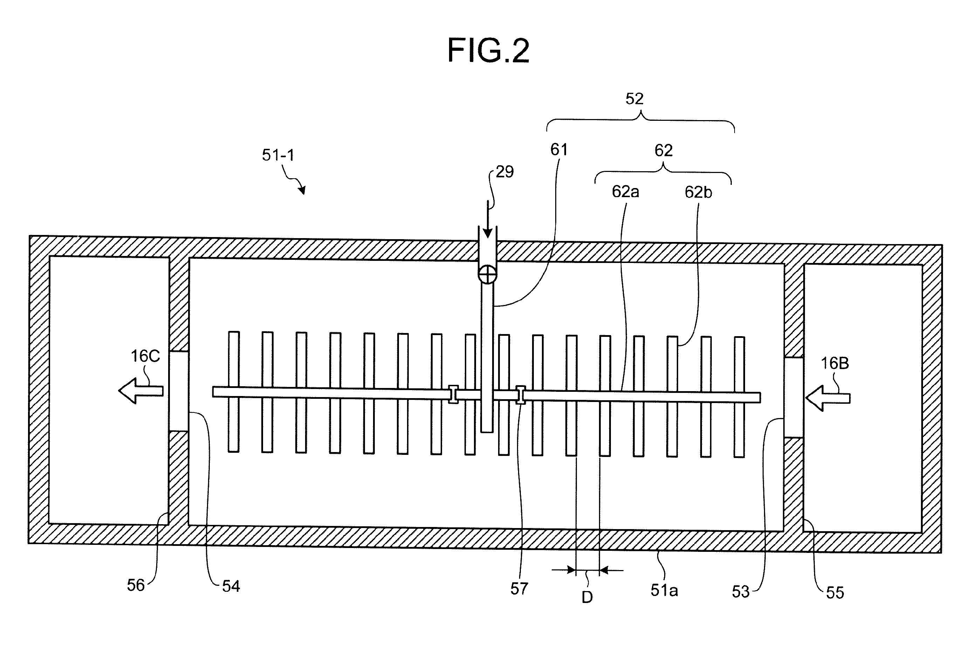

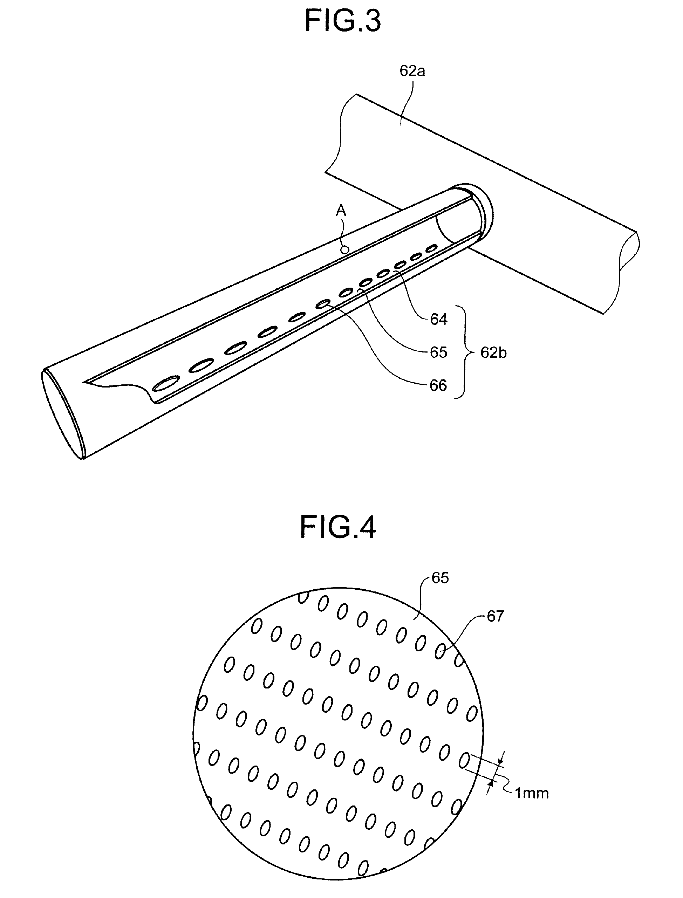

Fig. 1 is a schematic of a configuration of the seawater desulfurization system employing the seawater treatment apparatus in which the first oxidation basin according to the first embodiment is used. Fig. 2 is a schematic of a configuration of the first oxidation basin according to the first embodiment. Fig. 3 is a diagram of a configuration of an air tube. In Figs. 1 to 3, similar reference characters are used to indicate elements similar to those shown in Fig. 26, and the duplicating descriptions are omitted.

As shown in Fig. 1, this seawater desulfurization system 40 employing the seawater treatment apparatus in which the first oxidation basin according to the present embodiment of the present invention includes: a boiler 12 that causes a burner (not shown) to burn fuel with air 11 preheated by an air preheater (AH) 41; a steam turbine 44 that uses a flue gas 13 emitted from the boiler 12 as a heat source for the generation of steam, and drives a power generator 43 with generated steam 42; a condenser 46 that collects water 45 condensed in the steam turbine 44, and circulates the water 45; a flue-gas denitration apparatus 47 that denitrates the flue gas 13 emitted from the boiler 12; a dust collecting apparatus 14 that reduces ash dust contained in the flue gas 13 emitted from the boiler 12; a seawater desulfurization/oxidation treatment apparatus 48 that reduces sulfur content contained in the flue gas 13 with the use of seawater 15, and performs a water-quality restoring treatment of a sulfur-content absorbing seawater 16A containing the sulfur content in a high concentration that is produced by the seawater desulfurization; and a stack 26 from which purged gas 25 that is the flue gas 13 subjected to the desulfurization in the seawater desulfurization/oxidation treatment apparatus 48 is released outside.
Incidentally, in the present embodiment, sulfur-content absorbing seawater is flow-down liquid of the seawater that absorbed sulfur content in the flue-gas desulfurization absorber 20.

The air 11 that is supplied from the outside is fed to the air preheater 41 by a forced draft fan 49, and preheated by the air preheater 41. Fuel (not shown) and the air 11 preheated by the air preheater 41 are supplied to the burner. The fuel is burned by the boiler 12, and the steam 42 that drives the steam turbine 44 is generated. Incidentally, the fuel (not shown) used in the present embodiment is supplied from, for example, an oil tank.

The flue gas 13 produced by the combustion in the boiler 12 is fed to the flue-gas denitration apparatus 47. At this time, the flue gas 13 is subjected to heat exchange with the water 45 discharged from the condenser 47, and is used as the heat source for the generation of the steam 42. The generated steam 42 drives the power generator 43 of the steam turbine 44. Then, the water 45 condensed in the steam turbine 44 is again fed back to the boiler 12, and thus circulates.

Then, the flue gas 13 that is discharged from the boiler 12 and guided to the flue-gas denitration apparatus 47 is denitrated in the flue-gas denitration apparatus 47, and is subjected to heat exchange with the air 11 in the air preheater 41. After that, the flue gas 13 is fed to the dust collecting apparatus 14, and ash dust contained in the flue gas 13 is reduced. Then, the flue gas 13 from which the dust is reduced in the dust collecting apparatus 14 is supplied into the flue-gas desulfurization absorber 20 by the induction fan 21. At this time, the flue gas 13 is subjected to heat exchange with the purged gas 25 emitted after the desulfurization in the flue-gas desulfurization absorber 20 in a heat exchanger 50, and then supplied into the flue-gas desulfurization absorber 20. Alternatively, the flue gas 13 may be directly supplied to the flue-gas desulfurization absorber 20 without being subjected to the heat exchange with the purged gas 25 in the heat exchanger 50.

The seawater desulfurization/oxidation treatment apparatus 48 includes: the flue-gas desulfurization absorber 20 in which a sulfur oxide (SOx) contained in the flue gas 13 is subjected to a desulfurization reaction to produce sulfurous acid (H₂SO₃), and the sulfur content contained in the flue gas 13 is brought into contact with the seawater 15A as a portion of the seawater 15, thereby washing the sulfur-content in the flue gas 13; a first oxidation basin 51-1 in which a sulfur content contained in the sulfur-content absorbing seawater 16A discharged from the flue-gas desulfurization absorber 20 is oxidized and decarbonated to restore a water quality of the sulfur-content absorbing seawater 16A; the seawater supply line L1 through which the seawater 15 is supplied to the flue-gas desulfurization absorber 20; the sulfur-content absorbing seawater discharge line L3 through which the sulfur-content absorbing seawater 16A is discharged into the first oxidation basin 51-1; the seawater branching line L4 through which a portion of the seawater 15 as the first dilution seawater 15B is supplied to the upstream side of the first oxidation basin 51-1; and the second seawater branching line L5 through which a portion of the seawater 15 as the second dilution seawater 15C is supplied to the downstream side of the first oxidation basin 51-1.

In the present embodiment, out of the seawater 15, a portion of which is fed to the flue-gas desulfurization absorber 20 shall be referred to as the seawater 15A, a portion of which is fed to the upstream side of the first oxidation basin 51-1 shall be referred to as the first dilution seawater 15B, and a portion of which is fed to the downstream side of the first oxidation basin 51-1 shall be referred to as the second dilution seawater 15C.

In the flue-gas desulfurization absorber 20, the sulfur content contained in the flue gas 13 is reduced with the use of the seawater 15 pumped from the sea 22. The seawater desulfurization is performed in such a manner that the flue gas 13 is brought into gas-liquid contact with the seawater 15A supplied through the seawater supply line L1 in the flue-gas desulfurization absorber 20, and the sulfur content contained in the flue gas 13 is absorbed into the seawater 15A.

The seawater 15 pumped from the sea 22 is used for the heat exchange in the condenser 46, and discharged as a seawater discharge effluence. A portion of the discharged seawater 15 as the seawater discharge effluent is fed as the seawater 15A to the flue-gas desulfurization absorber 20 to be used for the seawater desulfurization. Alternatively, the seawater 15 pumped from the sea 22 may be directly used for the seawater desulfurization.

In the flue-gas desulfurization absorber 20, H⁺ produced by the gas-liquid contact between the seawater 15A and the flue gas 13 in the seawater desulfurization is freed in the seawater 15A. Thus, the pH of the seawater 15A is decreased and a large amount of the sulfur content is absorbed in the sulfur-content absorbing seawater 16A.

A portion of the seawater 15 flowing through the seawater supply line L1 is supplied as the first dilution seawater 15B to the upstream side of the first oxidation basin 51-1 through the first seawater branching line L4, and in the first oxidation basin 51-1, the sulfur-content absorbing seawater 16A is mixed with the first dilution seawater 15B so as to be diluted. Incidentally, the sulfur-content absorbing seawater 16B is seawater produced by mixing the sulfur-content absorbing seawater 16A with the first dilution seawater 15B so as to dilute the sulfur-content absorbing seawater 16A. Thus, the pH of the sulfur-content absorbing seawater 16B can be increased, and a SO₂ partial pressure is decreased. Thus, the dispersal of SO₂ can be prevented.

In the first oxidation basin 51-1, the air 29 is fed from the oxidation air blower 28 through a diffuser tube 52 into the first oxidation basin 51-1, and the sulfur content and the air 29 are brought into contact with each other in the first oxidation basin 51-1. Thus, the oxidation reaction and the decarbonation reaction are performed therein.

As shown in Fig. 2, the first oxidation basin 51-1 according to the present embodiment includes the diffuser tube 52 through which the air 29 is supplied into the sulfur-content absorbing seawater 16A produced by the seawater desulfurization of bringing the sulfur content contained in the flue gas 13 into contact with the seawater 15A. The first oxidation basin 51-1 performs the water-quality restoring treatment of the sulfur-content absorbing seawater 16A. The first oxidation basin 51-1 includes: an inlet 53 through which the sulfur-content absorbing seawater 16B flows to the side of the diffuser tube 52; and an outlet 54 through which the sulfur-content absorbing seawater 16C that is after being brought into contact with the air 29 supplied through the diffuser tube 52 flows out. The diffuser tube 52 includes a main tube 61 and an air tube 62. The main tube 61 supplies the air 29, and the air tube 62 extends from the main tube 61. The air tube 62 includes a sub tube 62a and a plurality of branch tubes 62b. The sub tube 62a is connected to the main tube 61 and extends in a certain direction, and each of the branch tubes 62b extends in a direction different from the direction in which the sub tube 62a extends. Each branch tube 62b is arranged so as to be generally perpendicular to a direction in which the sulfur-content absorbing seawater 16B flows. The air tube 62 is arranged so as to be bilaterally symmetric with respect to the main tube 61.

In the present embodiment, the inlet 53 is provided on an inflow plate 55 provided in the interior of a main body 51a of the first oxidation basin 51-1 on the side on which the sulfur-content absorbing seawater 16B is supplied, and the outlet 54 is provided on an outflow plate 56 provided in the interior of the main body 51a of the first oxidation basin 51-1 on the side on which the sulfur-content absorbing seawater 16B is discharged.
Incidentally, in Fig. 2, valves 57 connect the sub tubes 62a with each other.

Fig. 3 is a diagram of a configuration of the air tube. As shown in Fig. 3, each branch tube 62b of the diffuser tube 52 includes a tube body 64 and a porous membrane 65 that covers a surface of the tube body 64. A plurality of pores 66 is provided on the surface of the tube body 64.

Fig. 4 is a partial enlarged view of a section indicated by the reference character A in Fig. 3, that is, a partial enlarged view of the surface of the porous membrane. As shown in Fig. 4, a plurality of micropores 67 is provided on the surface of the porous membrane 65. Accordingly, the air 29 supplied to the interior of each branch tube 62b of the air tube 62 can be supplied into the sulfur-content absorbing seawater 16B in the first oxidation basin 51-1 through the micropores 67 of the porous membrane 65, via the pores 66 provided on the surface of the tube body 64.

Thus, the air 29 can be supplied thereto through the entire branch tube 62b. Therefore, the air 29 can be more efficiently supplied into the sulfur-content absorbing seawater 16B. As a result, oxidation reaction of hydrogen sulfurous ion (HSO₃⁻) contained in the sulfur-content absorbing seawater 16B can be accelerated.

The air tube 62 includes the sub tube 62a that is connected to the main tube 61 and extends in a certain direction and the branch tubes 62b that is connected to the sub tube 62a and extends in a direction different from the direction in which the sub tube 62a extends, and each branch tube 62b is arranged so as to be generally perpendicular to the direction in which the sulfur-content absorbing seawater 16B flows. Therefore, generation of turbulence in the flow of the sulfur-content absorbing seawater 16B in the first oxidation basin 51-1 is facilitated. Therefore, a contact efficiency between the air 29 ejected from the pores 66 of the air tube 62 and the sulfur-content absorbing seawater 16B is enhanced, and thus, the oxidation reaction of the hydrogen sulfurous ion contained in the sulfur-content absorbing seawater 16B can be accelerated.

As shown in Fig. 4, a diameter of each pore 66 provided on the surface of the porous membrane 65 is preferably, for example, equal to or more than 0.9 millimeter and equal to or less than 1.1 millimeters, more preferably, equal to or more than 0.95 millimeter and equal to or less than 1.05 millimeters, and still more preferably, about 1 millimeter. This is because the minimum diameter of an air bubble of each pore 66 that can stably exist in seawater is about 1 millimeter. Therefore, if a size of the pore 66 is larger than 1.1 millimeters, a gas-liquid contact area of the branch tube 62b per unit ventilation volume is decreased, which decreases an efficiency of oxygen dissolution. On the other hand, if a size of the pore 66 is smaller than, for example, 0.9 millimeter, a pressure loss of the branch tube 62b is increased, which makes it difficult to enlarge a gas-liquid contact area.

The porous membrane 65 is preferably made of an elastic body, and is preferably made from rubber and the like from a viewpoint of productivity and workability. Known rubber material may be used therefor such as ethylene propylene rubber (EPDM), silicone rubber, polyurethane, chloroprene rubber, nitrile rubber, fluororubber, and perfluoroelastomer. Among those, EPDM is preferable from a viewpoint of strength.

In the diffuser tube 52, the air tubes 62 are provided so that the air tubes 62 are provided on the both side of the main tube 61 with the main tube 61 in the middle of the air tubes 62. Because the air tubes 62 are provided on the both sides of the main tube 61 with the main tube 61 in the middle thereof, the air 29 can be stably supplied to the branch tube 62b located furthermost away from the main tube 61. Therefore, with the diffuser tube 52 provided to the first oxidation basin 51-1 according to the present embodiment, the air 29 can be more stably supplied to the far end of the air tube 62, compared with a case in which an air tube 62 is provided only on one side of the main tube 61. As a result, the air 29 flowing through the air tube 62 can be more stably supplied into the sulfur-content absorbing seawater 16B in the first oxidation basin 51-1, compared with a conventional seawater treatment apparatus.

The diffuser tube 52 is formed of tubular members, e.g., the main tube 61 and the air tube 62. Therefore, the diffuser tube 52 can be easily manufactured and installed into the first oxidation basin 51-1.

As shown in Fig. 3, the air tube 62 is a cylindrical shaped tube. More specifically, each branch tube 62b of the air tube 62 is rectangular shaped in the longitudinal direction thereof, and a cross-section thereof cut perpendicularly to the longitudinal direction thereof is circular shaped. On the other hand, in a conventional seawater treatment apparatus, for example, a plate shaped plate type diffuser tube, generally elliptical flat plated shaped diffuser tube, or the like is used as an air supply facility.

By using the branch tubes 62b, which are rectangular shaped in the longitudinal direction thereof and a cross-section cut perpendicularly to the longitudinal direction thereof is circular shaped as in the present embodiment, a distance D between neighboring branch tubes 62b provided to the air tube 62 can be made smaller than in the case where conventional air supply facilities such as a plate shaped plate type diffuser tube and a generally elliptical flat plate shaped diffuser tube. Therefore, although the distance D between neighboring branch tubes 62b may seem large in Fig. 2, the distance D can be made small to the point where the branch tubes 62b are almost in contact with each other.

In the present embodiment, a distance between neighboring branch tubes 62b is equal to or more than 400 millimeters and equal to or less than 1000 millimeters. A distance therebetween is preferably equal to or more than 450 millimeters and equal to or less than 490 millimeters, and the most preferably, about 470 millimeters. The air tube 62 is installed in the seawater and is fixed therein. Therefore, the air tube 62 situated in the flow of the seawater resists the flow of the seawater against the current speed of the seawater. Therefore, turbulence occurs in the flow of the seawater around the air tube 62. Therefore, if a distance D between neighboring branch tubes 62b is smaller, due to the branch tube 62b located upstream, less turbulence occurs around the branch tube 62b located downstream and a flow passage resistance thereof is decreased. As a result, the facility cost and the running cost can be reduced. If a distance D between neighboring branch tubes 62b is smaller than 400 millimeters, although the branch tube 62b located upstream does not produce flow passage resistance to the branch tube 62b located downstream, maintainability drops. If a distance D between neighboring branch tubes 62b is larger than 1000 millimeters, distance D between the branch tubes 62b is large enough so that the turbulence of the flow of the seawater is increased, and a flow passage resistance thereof is increased.

If the branch tubes 62b are arranged so that a distance between neighboring branch tubes 62b is smaller, more branch tubes 62b can be installed in the first oxidation basin 51-1. Therefore, the volume of the air supplied into the sulfur-content absorbing seawater 16B can be increased compared with the case where a conventional air supply facility such as a plate shaped plate type diffuser tube and a generally elliptical flat plate shaped diffuser tube is used.

The number of branch tubes 62b installed per unit area in the interior of the first oxidation basin 51-1 can be increased. Therefore, generation of turbulence in the flow of the sulfur-content absorbing seawater 16B can be facilitated, thereby enhancing a contact efficiency between the air 29 supplied through the micropores 67 provided on the porous membrane 65 of each branch tube 62b and the sulfur-content absorbing seawater 16B.

In the present embodiment, each branch tube 62b is rectangular shaped in the longitudinal direction thereof. The present invention is not, however, limited thereto. Alternatively, a shape of the both ends of each branch tube 62b may be arc shaped. More specifically, for example, a shape of the both ends of each branch tube 62b may be round rectangular shaped, circular shaped, or elliptical shaped.

In the present embodiment, the air 29 is supplied into the sulfur-content absorbing seawater 16B in the first oxidation basin 51-1 through the porous membrane 65 of each branch tube 62b. The present invention is not, however, limited thereto. Alternatively, a plurality of oxidation air nozzles may be provided on each branch tube 62b in the longitudinal direction thereof.

Tubes that supply the air 29 may further be provided to the branch tubes 62b so that the tubes and the branch tube 62b are perpendicular to each other and that the tubes and the branch tubes 62b are formed like a ladder. Similar to the branch tubes 62b, the porous membrane 65 may be provided to the tubes, and the air 29 may be supplied into the sulfur-content absorbing seawater 16B in the first oxidation basin 51-1 through the micropores 67 of the porous membrane 65. Alternatively, the oxidation air nozzles may be provided to the tubes that are provided to the branch tubes 62b so that the tubes and the branch tubes 62b are perpendicular to each other and that the tubes and the branch tubes 62b are formed like a ladder. The air 29 may be supplied into the sulfur-content absorbing seawater 16B in the first oxidation basin 51-1 through the oxidation air nozzles.

In the present embodiment, the pores may be provided on the surface of the sub tube 62a, thereby supplying the air 29 into the sulfur-content absorbing seawater 16B in the first oxidation basin 51-1 through the sub tube 62a. In this case, pressure of the air 29 supplied into the sub tube 62a of the air tube 62 from the oxidation air blower 28 is adjusted so that the air 29 is supplied to the entire air tube 62.

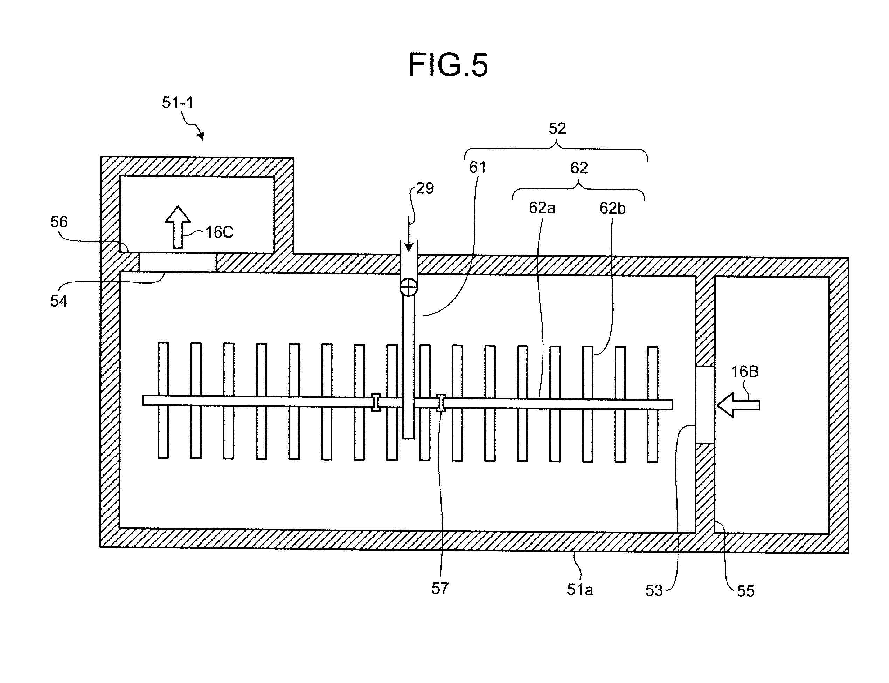

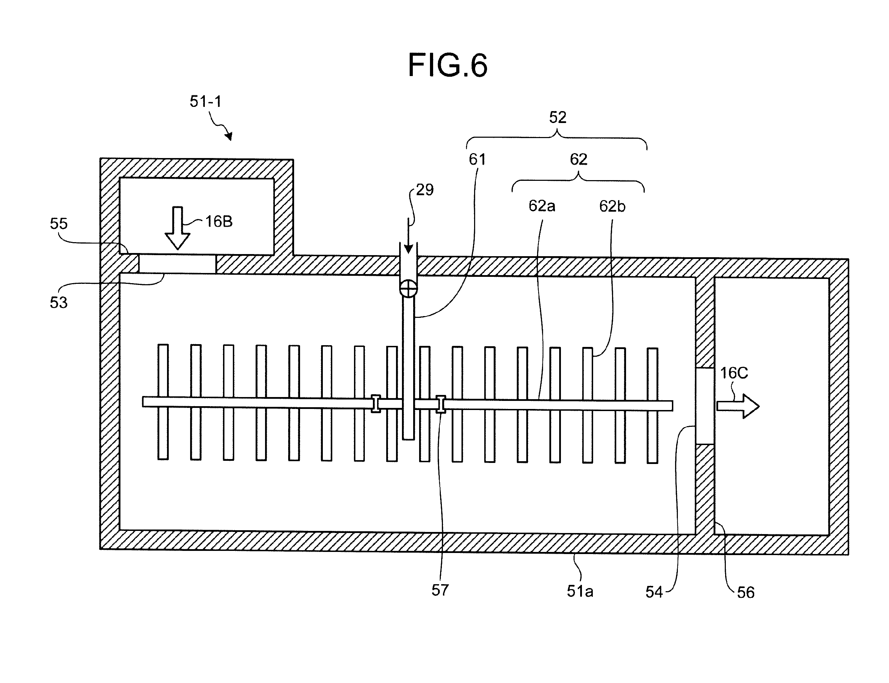

In the present embodiment, the inlet 53 and the outlet 54 are provided on walls of the first oxidation basin 51-5 that face each other. The present invention is not, however, limited thereto. Figs. 5 and 6 are schematics of other configurations of the oxidation basin. As shown in Figs. 5 and 6, the outlet 54 may be provided on any of the walls of the oxidation basin 51-1 that is next to the wall on which the inlet 53 is provided.

The inlet 53 and the outlet 54 may be provided, not on the walls that form the first oxidation basin 51-1, but, for example, above any of the walls thereof. In this case, the sulfur-content absorbing seawater 16B may flow down into the first oxidation basin 51-1 from above any of the walls thereof as an inlet. A pump may be provided on the side of a wall from which the sulfur-content absorbing seawater 16B flows out, and the pump may suck out the sulfur-content absorbing seawater 16B from the first oxidation basin 51-1.

An inlet and an outlet provided above the first oxidation basin 51-1 as openings can be larger than the inlet and the outlet provided on the walls of the first oxidation basin 51-1. In this case, the flow of the sulfur-content absorbing seawater 16B can spread in a wider range in the first oxidation basin 51-1. Accordingly, a range in which the sulfur-content absorbing seawater 16B does not flow is smaller.

Alternatively, either one of the inlet 53 and the outlet 54 may be provided on a wall of the first oxidation basin 51-1 while the other may be provided above the walls of the first oxidation basin 51-1. In this case, the sulfur-content absorbing seawater 16B may flow into the first oxidation basin 51-1, and the sulfur-content absorbing seawater 16C in the first oxidation basin 51-1 may be discharged, for example, by using a pump.

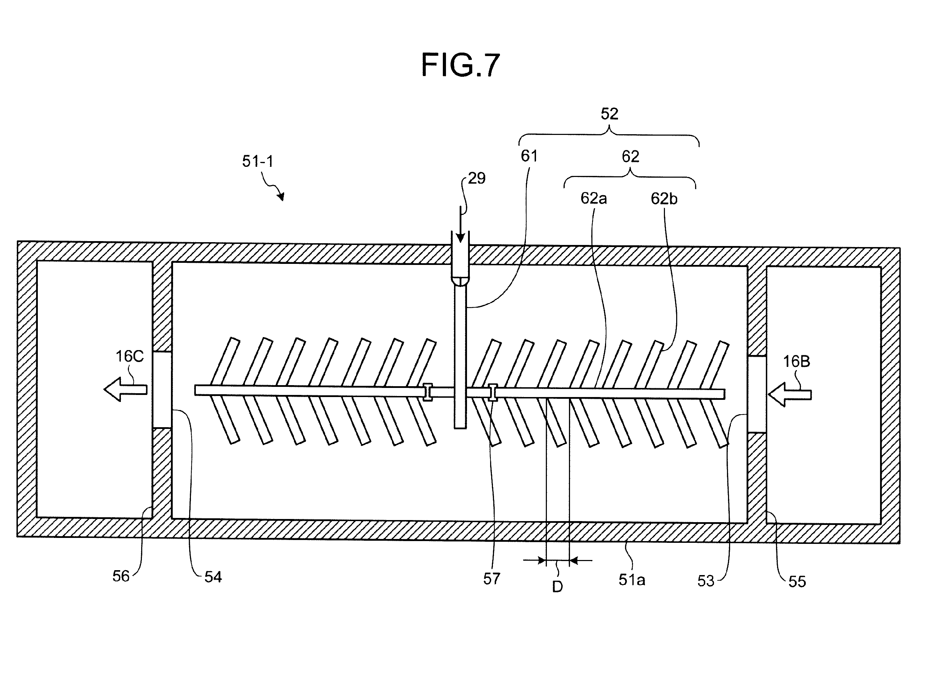

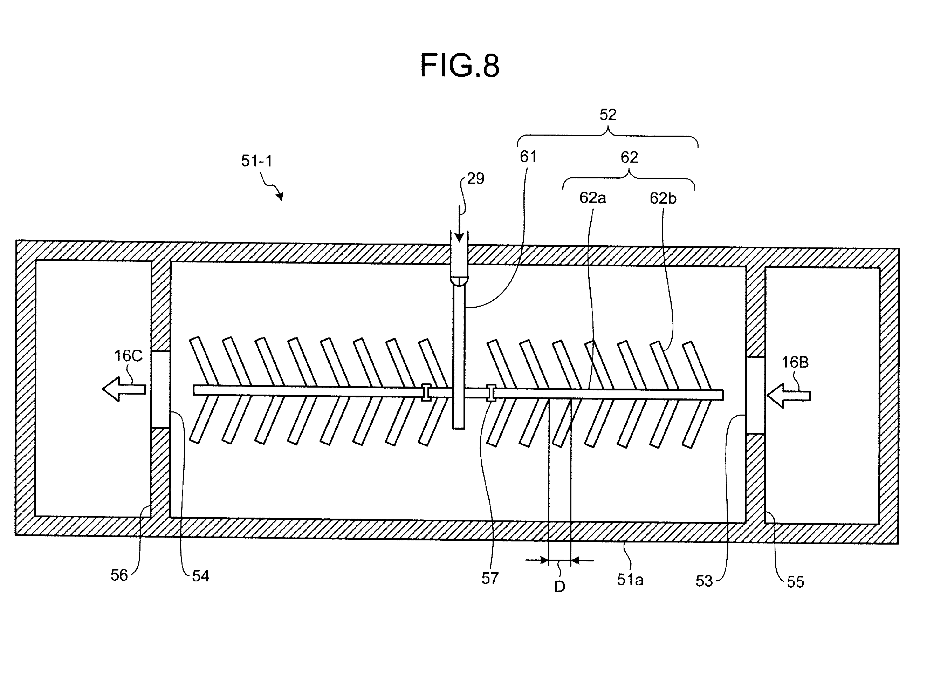

In the present embodiment, the branch tubes 62b are arranged in the first oxidation basin 51-1 so as to be perpendicular to the flow direction of the sulfur-content absorbing seawater 16B. The present invention is not, however, limited thereto. Fig. 7 is a diagram of an example of a configuration of the air tube. As shown in Fig. 7, the branch tubes 62b may be arranged in a slanting position toward the direction in which the sulfur-content absorbing seawater 16B flows so that an angle between the branch tubes 62b and the flow direction of the sulfur-content absorbing seawater 16B flowing from the inlet 53 is, for example, equal to or more than 45 degrees and less than 90 degrees. Fig. 8 is a diagram of another configuration of the air tube. As shown in Fig. 8, the branch tubes 62b may be arranged in a slanting position toward the direction in which the sulfur-content absorbing seawater 16C flows out through the outlet 54 so that an angle between the branch tubes 62b and the flow direction of the sulfur-content absorbing seawater 16C is, for example, equal to or more than 45 degrees and less than 90 degrees. If the branch tubes 62b are arranged with a certain angle between the branch tubes 62b and the sub tube 62a, the air 29 supplied through the branch tubes 62b can be more efficiently supplied into the sulfur-content absorbing seawater 16B.

Due to the oxidation reaction and the decarbonating reaction of the hydrogen sulfurous ion (HSO₃⁻) contained in the sulfur-content absorbing seawater 16B in the first oxidation basin 51-1, a water quality of the sulfur-content absorbing seawater 16B is restored and is discharged through the outlet 54 of the outflow plate 56 as the sulfur-content absorbing seawater 16C.

A portion of the seawater 15 through the seawater supply line L1 is fed to the downstream side of the first oxidation basin 51-1 as the second dilution seawater 15C through the second seawater branching line L5. Then, the second dilution seawater 15C is mixed into the sulfur-content absorbing seawater 16C so as to further dilute the sulfur-content absorbing seawater 16C.

The second dilution seawater 15C is mixed into the sulfur-content absorbing seawater 16C so as to further dilute the sulfur-content absorbing seawater 16C, thereby producing the water-quality restored seawater 31. The water-quality restored seawater 31 is discharged into the sea 22 through the seawater discharge line L6 as seawater effluent. Thus, pH of the water-quality restored seawater 31 can be increased and a COD thereof can be decreased so that the water-quality restored seawater 31 have a pH and a COD at dischargeable seawater level upon being discharged.

Thus, the first oxidation basin 51-1 according to the present embodiment includes: the diffuser tube 52 that supplies the air 29 to the sulfur-content absorbing seawater 16B; and the inlet 53 and the outlet 54 of the sulfur-content absorbing seawater 16B. The diffuser tube 52 includes: the main tube 61 that supplies the air 29 to the air tube 62; and the air tube 62 that extends from the main tube 61. The air tube 62 includes the sub tube 62a that is connected to the main tube 61 and extends in a certain direction; and the branch tubes 62b that is connected to the sub tube 62a and extends in a direction different from the direction in which the sub tube 62a extends. The branch tubes 62b are arranged so as to be generally perpendicular to the flow direction of the sulfur-content absorbing seawater 16B. Because the flow direction of the sulfur-content absorbing seawater 16B and the branch tubes 62b of the air tube 62 are generally perpendicular to each other, generation of turbulence in the flow of the sulfur-content absorbing seawater 16B is facilitated. Thus, contact efficiency between the air 29 supplied through the air tube 62 and the sulfur-content absorbing seawater 16B can be enhanced. As a result, the air 29 and the sulfur-content absorbing seawater 16B can be efficiently brought into contact with each other, and the oxidization of the sulfur-content absorbing seawater 16B can be further accelerated.

The branch tubes 62b of the air tube 62 includes the tube body 64 and the porous membrane 65 that covers the surface of the tube body 64, and the air 29 supplied in the air tube 62 is supplied into the sulfur-content absorbing seawater 16B in the first oxidation basin 51-1 through the micropores 67 of the porous membrane 65. Therefore, the air 29 can be supplied from the entire air tube 62. Thus, the air 29 can be efficiently supplied into the sulfur-content absorbing seawater 16B.

Thus, in the seawater desulfurization system 40 employing the seawater desulfurization/oxidation treatment apparatus 48 in which the first oxidation basin 51-1 according to the present embodiment is used, the air 29 supplied through the air tube 62 and the sulfur-content absorbing seawater 16B can be efficiently brought into contact with each other. Therefore, the oxidation of the sulfur-content absorbing seawater 16B can be further accelerated. Thus, the pH of the water-quality restored seawater 31 can be increased so as to be approximately equal to the pH of seawater so that the pH of the water-quality restored seawater 31 can meet a discharge standard (pH: 6.0 or more). Therefore, the water-quality restored seawater 31 can be released into the sea or can be reused, and also costs can be reduced by the reduction of the oxidation facility cost.

In the present embodiment, in the seawater treatment apparatus, the first oxidation basin 51-1 is used for the treatment of the seawater used for desulfurization in the flue-gas desulfurization absorber 20. The present invention is not, however, limited thereto. The first oxidation basin 51-1 may be used to reduce a sulfur content contained in sulfur-content absorbing seawater produced when sulfur oxide is subjected to seawater desulfurization, the sulfur oxide being contained in a flue gas discharged from, for example, factories in various industries, electric power plants such as a large and middle scaled thermal power plant, electric industrial large scaled boilers, and general industrial boilers.

### [Second embodiment]

A seawater desulfurization system employing a seawater treatment apparatus in which a second oxidation basin according to a second embodiment of the present invention is used is described with reference to a drawing.
A configuration of the seawater desulfurization system is similar to the configuration of the seawater desulfurization system employing the seawater treatment apparatus in which the first oxidation basin according to the first embodiment is used. Therefore, descriptions of the whole configuration of the seawater desulfurization system are omitted, and only the second oxidation basin according to the second embodiment is described. Similar reference characters are used to indicate elements similar to those of the first oxidation basin according to the first embodiment, and the duplicating descriptions are omitted.

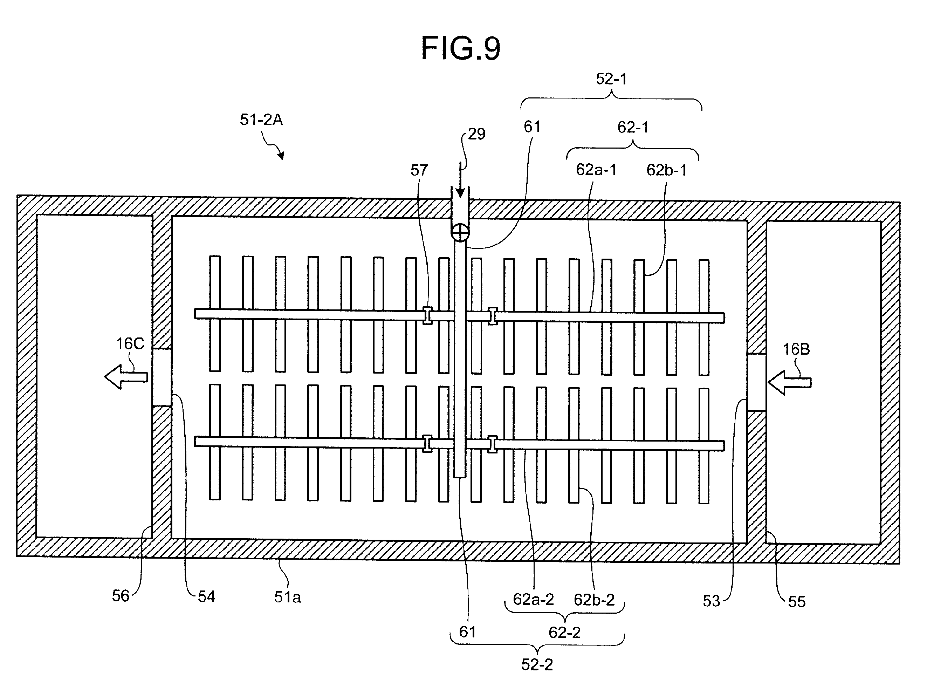

Fig. 9 is a schematic of a configuration of the second oxidation basin according to the second embodiment.
As shown in Fig. 9, a second oxidation basin 51-2A according to the present embodiment includes two diffuser tubes 52-1 and 52-2. The diffuser tube 51-1 includes the main tube 61 and an air tube 62-1, and the diffuser tube 52-2 includes the main tube 61 and an air tube 62-2. The air tube 62-1 includes a sub tube 62a-1 and branch tubes 62b-1, and the air tube 62-2 includes a sub tube 62a-2 and branch tubes 62b-2. The porous membrane 65 (see Figs. 3 and 4) is provided on surfaces of the branch tubes 62b-1 and 62b-2.

As shown in Fig. 9, in the second oxidation basin 51-2A according to the present embodiment, the diffuser tubes 52-1 and 52-2 are arranged in parallel to each other with a predetermined distance therebetween in the direction perpendicular to the shaft direction of the sub tubes 62a-1 and 62a-2.
In the present embodiment, the sub tubes 62a-1 and 62a-2 share the main tube 61. The present invention is not, however, limited thereto. The main tubes 61 may be separately provided for each of the sub tubes 62a-1 and 62a-2.

In the second oxidation basin 51-2A according to the present embodiment, two diffuser tubes 52-1 and 52-2 are arranged in parallel to each other with a predetermined distance therebetween in the direction perpendicular to the shaft directions of the sub tubes 62a-1 and 62a-2. Therefore, the air 29 can be efficiently supplied into the sulfur-content absorbing seawater 16B in the second oxidation basin 51-2A through the micropores 67 of the porous membranes 65 of each branch tube 62b-1 and 62b-2.

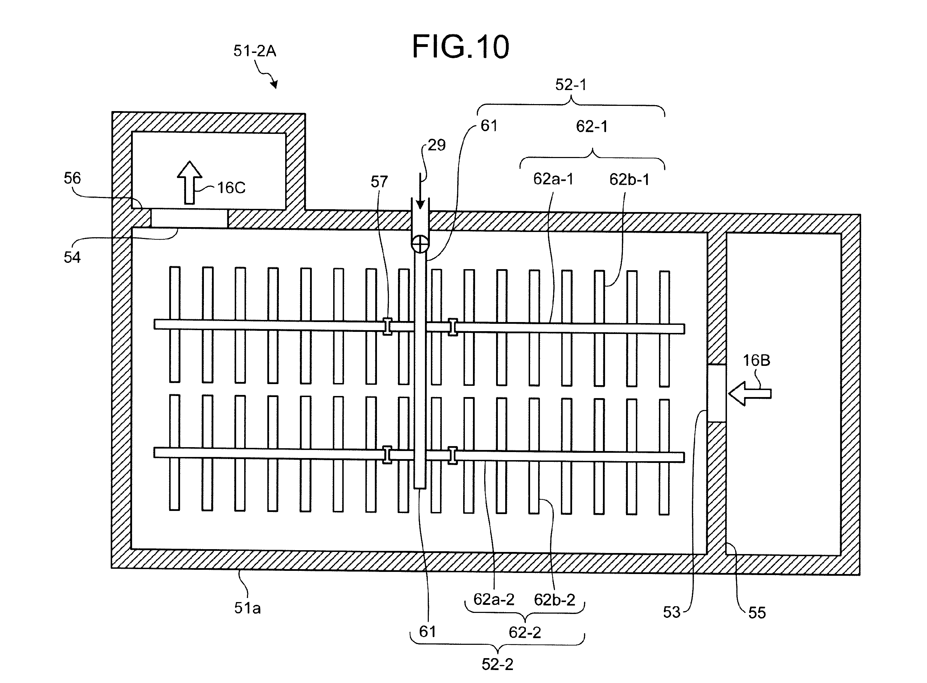

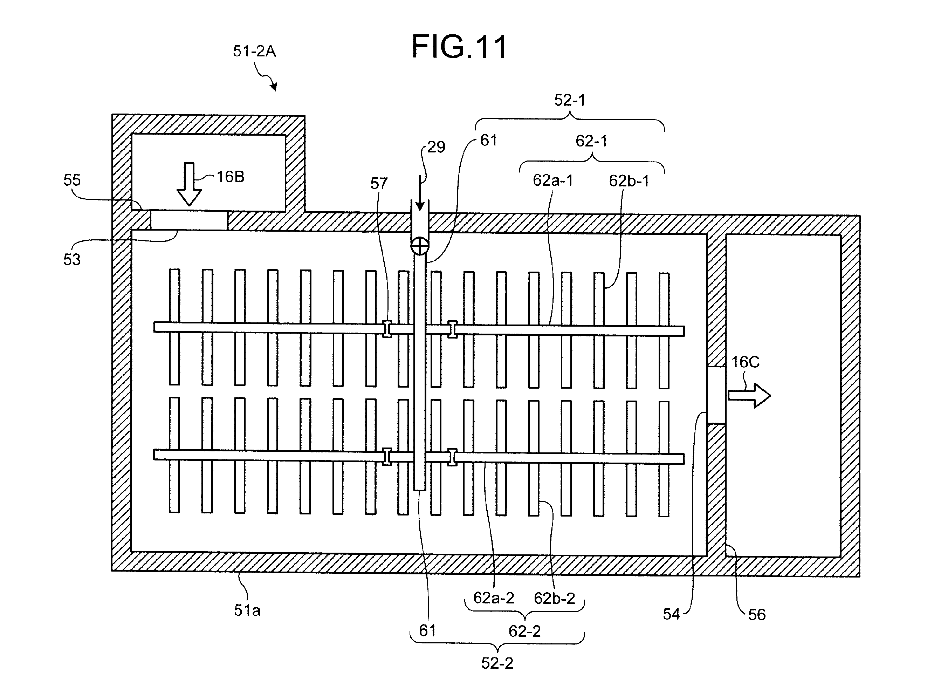

In the present embodiment, the inlet 53 and the outlet 54 are provided on walls of the second oxidation basin 52-2A that face each other. The present invention is not, however, limited thereto. Figs. 10 and 11 are schematics of other configurations of the oxidation basin. As shown in Figs. 10 and 11, the outlet 54 may be provided on any of the walls of the second oxidation basin 51-2A that is next to the wall on which the inlet 53 is provided.

In the second oxidation basin 51-2A according to the present embodiment, the branch tubes 62b-1 of the air tube 62-1 and the branch tubes 62b-2 of the air tube 62-2 are arranged equally spaced in parallel to each other in the shaft directions of the sub tubes 62a-1 and 62a-2. The present invention is not, however, limited thereto.

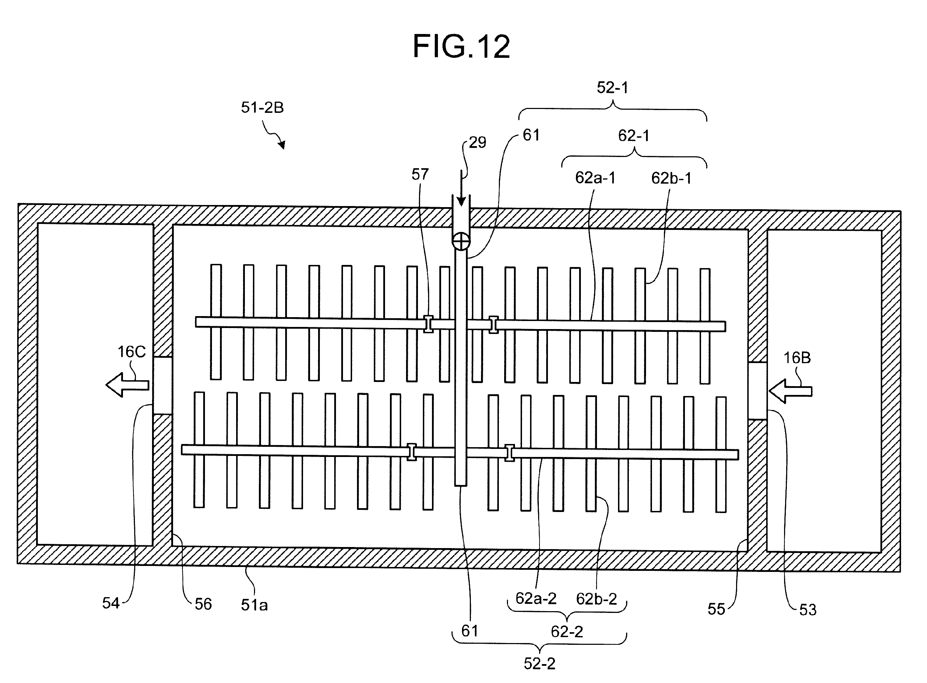

Fig. 12 is a schematic of another configuration of the second oxidation basin according to the present embodiment. As shown in Fig. 12, in a second oxidation basin 51-2B, the two air tubes 62-1 and 62-2 are arranged so as to be parallel to each other, and the branch tubes 62b-1 and 62b-2 connected to the air tubes 62-1 and 62-2, respectively are offset to each other. That is, in the second oxidation basin 51-2B according to the present embodiment, the branch tubes 62b-1 and 62b-2 are arranged so that any of the branch tubes 62b-1 or 62b-2 or both are shifted in the shaft direction of the sub tubes 62a-1 and 62a-2 in the second oxidation basin 51-2A shown in Fig. 9. As a result, each of the branch tubes 62b-2 is located between neighboring branch tubes 62b-1.

Because the branch tubes 62b-1 and 62b-2 are offset to each other, the air 29 can be efficiently and evenly supplied into the sulfur-content absorbing seawater 16B in the second oxidation basin 51-2B through the micropores 67 of the porous membranes 65 of the branch tubes 62b-1 and 62b-2.

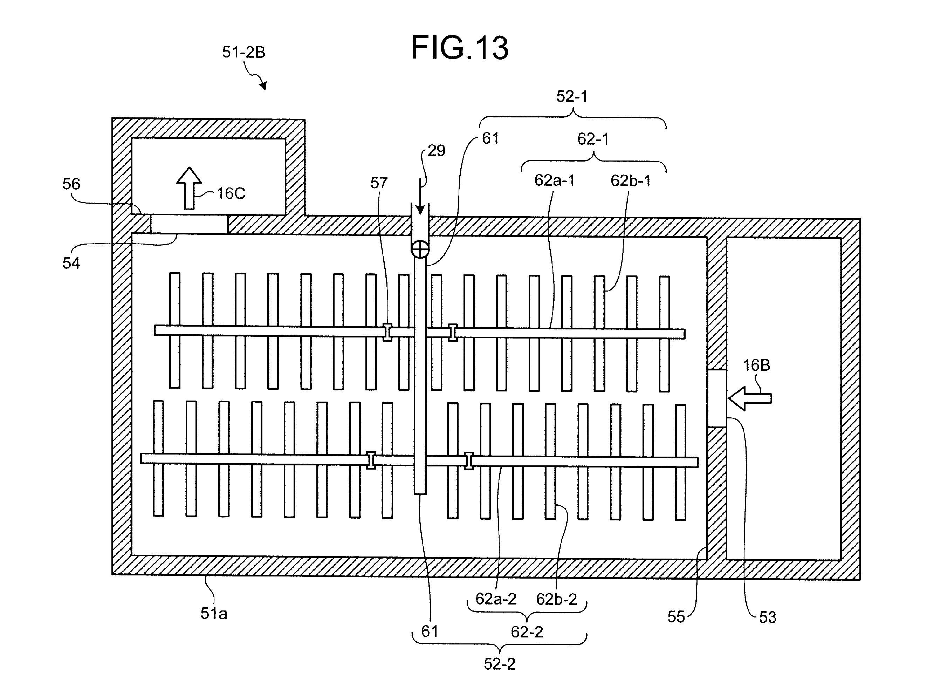

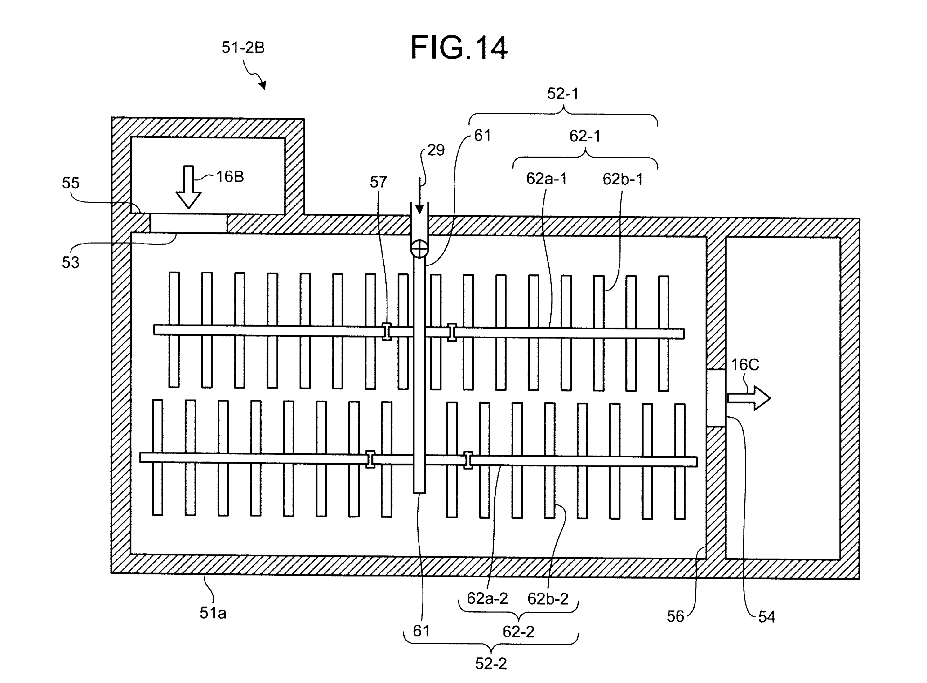

The inlet 53 and the outlet 54 are provided on a pair of walls of the second oxidation basin 51-2B that face each other. The present invention is not, however, limited thereto. Figs. 13 and 14 are schematics of other configurations of the oxidation basin. As shown in Figs. 13 and 14, the outlet 54 may be provided on any of the walls next to the wall of the second oxidation basin 51-2B on which the inlet 53 is provided.

In the second oxidation basin 51-2A or 51-2B according to the present embodiment, the diffuser tubes 52-1 and 52-2 are arranged in parallel to each other in the perpendicular direction of the shaft direction of the sub tubes 62a-1 and 62a-2. The present invention is not, however, limited thereto. Three or more diffuser tubes 52-1 and 52-2 may be arranged in parallel to each other with a predetermined distance between neighboring diffuser tubes in the perpendicular direction of the shaft direction of the sub tubes 62a-1 and 62a-2.

In the second oxidation basin 51-2A or 51-2B according to the present embodiment, a pair of the diffuser tubes 52-1 and 52-2 is provided in the shaft direction of the sub tubes 62a-1 and 62a-2. The present invention is not, however, limited thereto. Two or more of any of the diffuser tubes 52-1 and 52-2 or both may be provided in the shaft direction of the sub tubes 62a-1 and 62a-2.

In the present embodiment, two or more of the diffuser tubes 52-1 and 52-2 may be provided with a predetermined distance between neighboring diffuser tubes either in the shaft direction of the sub tubes 62a-1 and 62a-2 or the direction perpendicular to the shaft direction of the sub tubes 62a-1 and 62a-2.

### [Third embodiment]

A seawater desulfurization system employing a seawater treatment apparatus in which a third oxidation basin according to a third embodiment of the present invention is used is described with reference to a drawing.
A configuration of the seawater desulfurization system is similar to the configuration of the seawater desulfurization system employing the seawater treatment apparatus in which the first oxidation basin according to the first embodiment is used. Therefore, descriptions of the whole configuration of the seawater desulfurization system are omitted, and only the third oxidation basin according to the third embodiment is described. Similar reference characters are used to indicate elements similar to those in the first oxidation basin according to the first embodiment and the second oxidation basin according to the second embodiment, and the duplicating descriptions are omitted.

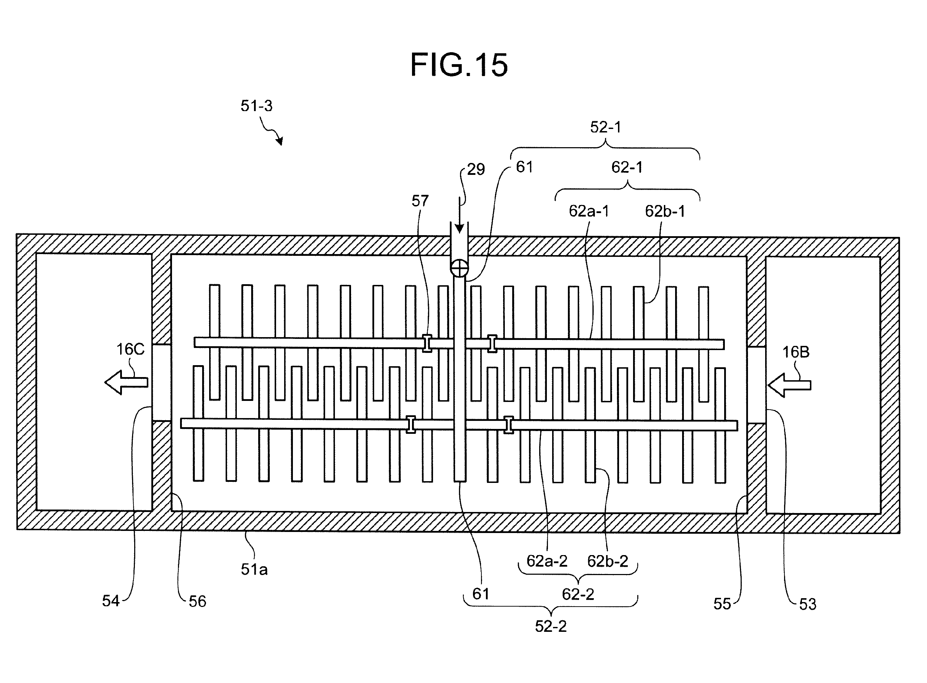

Fig. 15 is a schematic of a configuration of the third oxidation basin according to the third embodiment.
As shown in Fig. 15, in this third oxidation basin 51-3 according to the third embodiment, branch tubes 62b-1 and 62b-2 for air tubes 62-1 and 62-2, respectively, are arranged in a comb-like manner to each other. That is, between the branch tubes 62b-1 of the air tube 62-1 on one side, the branch tubes 62b-2 of the air tube 62-2 on the other side next to the air tube 62-1 are interleaved.

In the third oxidation basin 51-3 according to the third embodiment, between the branch tubes 62b-1 of the air tube 62-1 on one side, the branch tubes 62b-2 of the air tube 62-2 on the other side are interleaved. Thus, the air 29 can be efficiently supplied into the sulfur-content absorbing seawater 16B in the third oxidation basin 51-3 through the micropores 67 of the porous membranes 65 via the branch tubes 62b-1 and 62b-2. The air 29 can also be supplied thereto evenly and in high density.

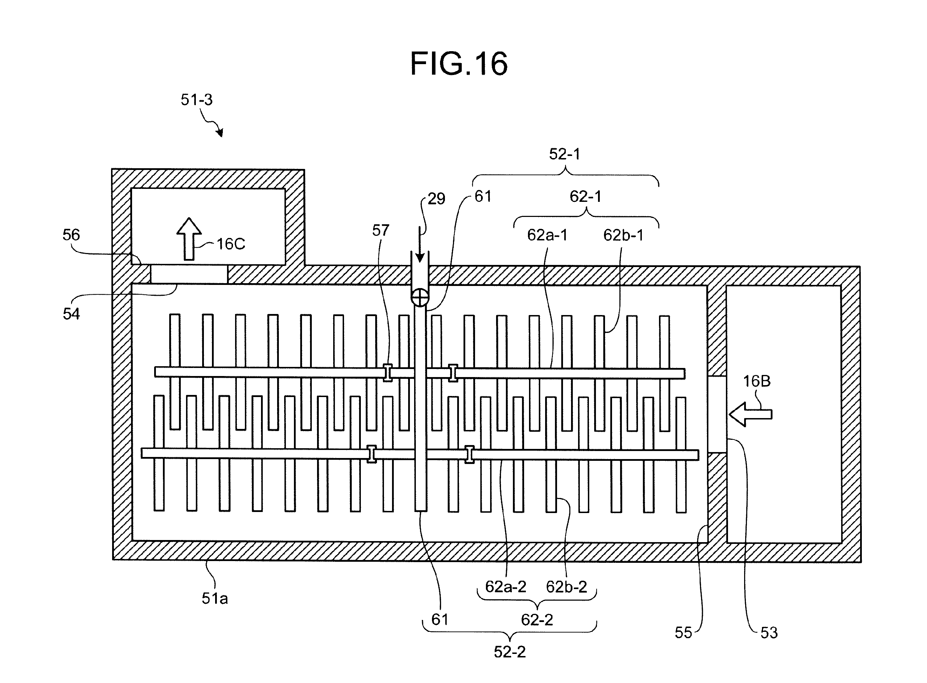

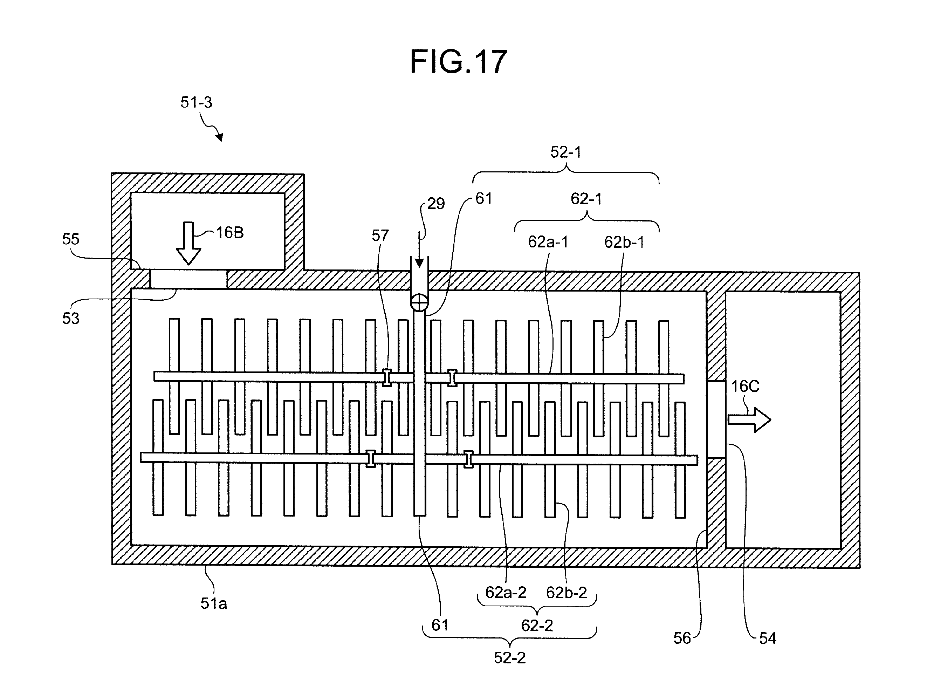

In the present embodiment, the inlet 53 and the outlet 54 are provided on walls of the third oxidation basin 51-3 that face each other. The present invention is not, however, limited thereto. Figs. 16 and 17 are schematics of other configurations of the oxidation basin. As shown in Figs. 16 and 17, the outlet 54 may be provided on any of the walls of the third oxidation basin 51-3 that is next to the wall on which the inlet 53 is provided.

### [Fourth embodiment]

A seawater desulfurization system employing a seawater treatment apparatus in which a fourth oxidation basin according to a fourth embodiment of the present invention is used is described with reference to drawings.
A configuration of the seawater desulfurization system is similar to the configuration of the seawater desulfurization system employing the seawater treatment apparatus in which the first oxidation basin according to the first embodiment is used. Therefore, descriptions of the whole configuration of the seawater desulfurization system are omitted, and only the fourth oxidation basin according to the fourth embodiment is described. Similar reference characters are used to indicate elements similar to those of the first oxidation basin according to the first embodiment to the third oxidation basin according to the third embodiment, and the duplicating descriptions are omitted.

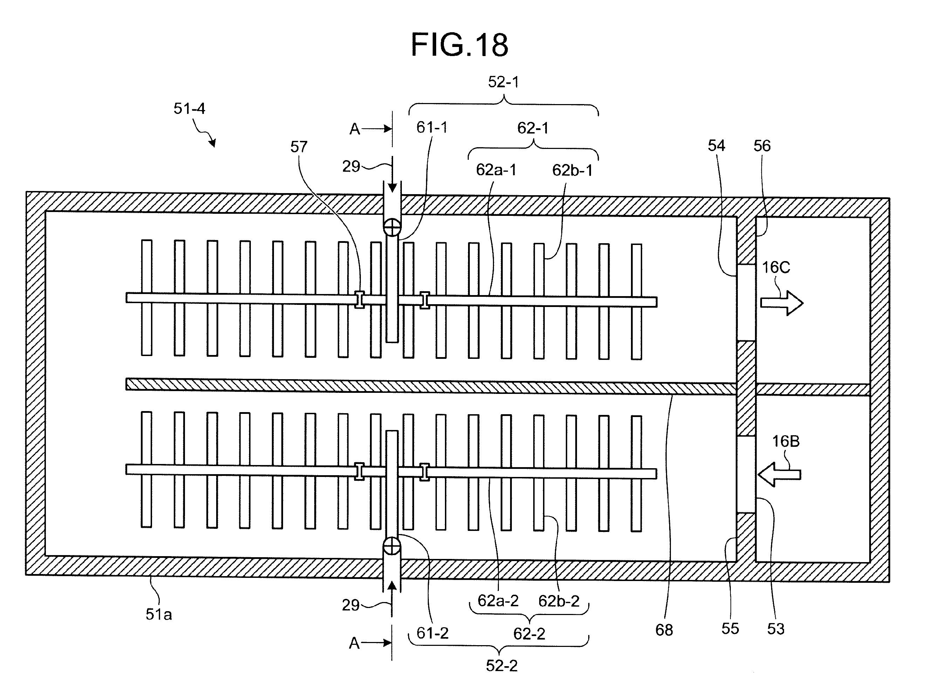

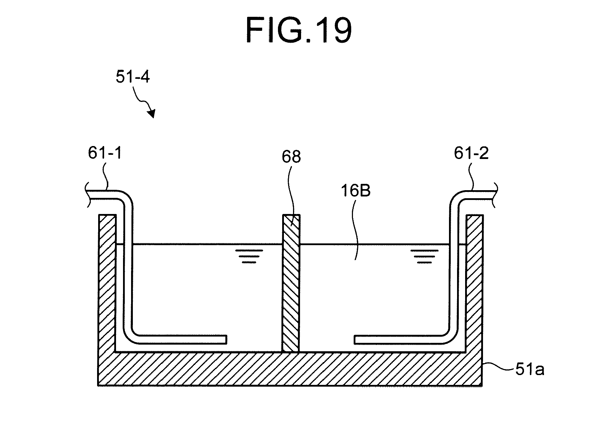

Fig. 18 is a schematic of a configuration of the fourth oxidation basin according to the fourth embodiment, and Fig. 19 is a sectional view taken along the line A-A in Fig. 18.

As shown in Fig. 18, in this fourth oxidation basin 51-4 according to the fourth embodiment, a partition plate 68 is provided between the two diffuser tubes 52-1 and 52-2.
That is, in the fourth oxidation basin 51-4 according to the fourth embodiment, the two diffuser tube 52-1 and 52-2 are provided therein in the shaft direction of the main body 51a, and the partition plate 68 is provided therein between the diffuser tubes 52-1 and 52-2. The air 29 is supplied into the diffuser tubes 52-1 and 52-2 through the main tubes 61-1 and 61-2.

In the fourth oxidation basin 51-4 according to the present embodiment, because the partition plate 68 between the diffuser tubes 52-1 and 52-2 is provided, the sulfur-content absorbing seawater 16B supplied into the main body 51a can pass through the diffuser tubes 52-1 and 52-2 individually. Therefore, the sulfur-content absorbing seawater 16B can stay in gas-liquid contact longer with the air 29 supplied through the micropores 67 of the porous membrane 65 of respective branch tubes 62b-1 and 62b-2 in the fourth oxidation basin 51-4. As a result, the air 29 can be securely supplied to the sulfur-content absorbing seawater 16B.

In the fourth oxidation basin 51-4 according to the present embodiment, the diffuser tubes 52-1 and 52-2 are separated by the partition plate 68. The present invention is not, however, limited thereto. For example, according to the number of the diffuser tubes installed in the interior of the main body 51a, the partition plate 68 may be provided between each set of neighboring diffuser tubes.

In the present embodiment, two or more diffuser tubes 52-1 and 52-2 similar to the second oxidation basin shown in Fig. 9 may be provided in parallel to each other on both sides of the partition plate 68 with a predetermined distance therebetween in the perpendicular direction of the shaft direction of the sub tubes 62a-1 and 62a-b. The number of the diffuser tubes 52-1 and 52-2 located on each side of the partition plate 68 may be different to each other.

In the present embodiment, two or more diffuser tubes 52-1 and 52-2 may be arranged with a predetermined distance therebetween in the shaft direction of the sub tubes 62a-1 and 62a-2.

In the fourth oxidation basin 51-4 according to the fourth embodiment, each of the branch tubes 62b-1 and 62b-2 of the air tube 62-1 and 62-2, respectively are arranged so that corresponding branch tubes 62b-1 and 62b-2 are positioned at the same positions along the shaft direction of the sub tubes 62a-1 and 62a-2. As in the second oxidation basin 51-2B according to the second embodiment shown in Fig. 12, the branch tubes 62b-1 and 62b-2 may also be arranged so as to be offset to each other.

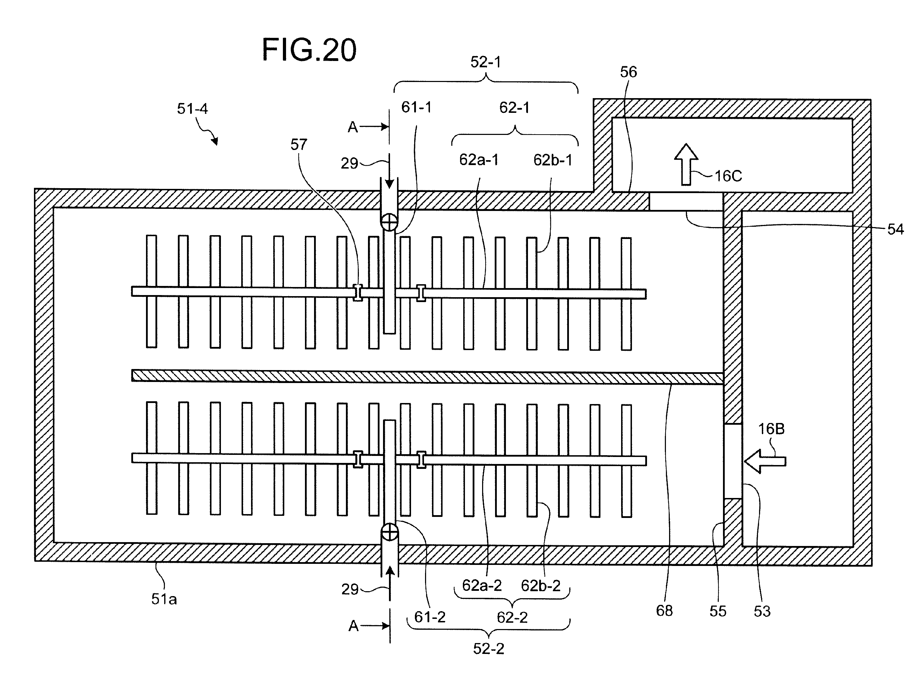

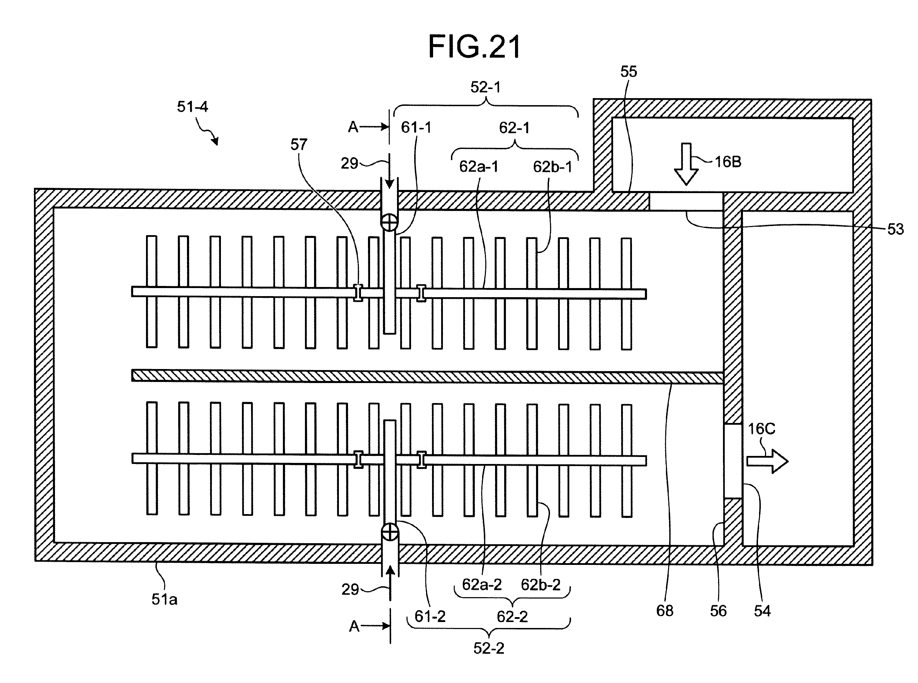

In the present embodiment, the inlet 53 and the outlet 54 are provided on the same wall of the fourth oxidation basin 51-4. The present invention is not, however, limited thereto. Figs. 20 and 21 are schematics of other configurations of the oxidation basin. As show in Figs. 20 and 21, the outlet 54 may be provided on any of the walls of the fourth oxidation basin 51-4 that is next to the wall on which the inlet 53 is provided.

### [Fifth embodiment]

A seawater desulfurization system employing a seawater treatment apparatus in which a fifth oxidation basin according to a fifth embodiment of the present invention is used is described with reference to drawings.
A configuration of the seawater desulfurization system is similar to the configuration of the seawater desulfurization system employing the seawater treatment apparatus in which the first oxidation basin according to the first embodiment is used. Therefore, descriptions of the whole configuration of the seawater desulfurization system are omitted, and only the fifth oxidation basin according to the fifth embodiment is described. Similar reference characters are used to indicate elements similar to those of the first oxidation basin according to the first embodiment to the fourth oxidation basin according to the fourth embodiment, and the duplicating descriptions are omitted.

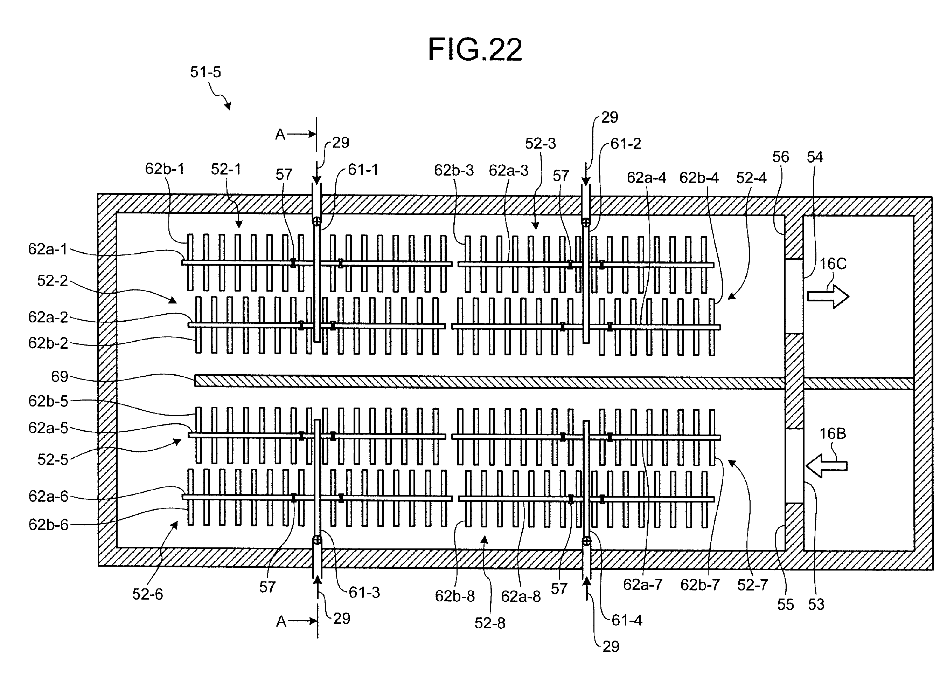

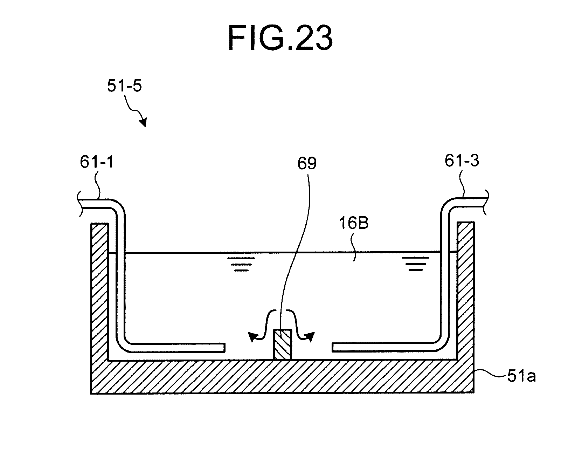

Fig. 22 is a schematic of a configuration of the fifth oxidation basin according to the fifth embodiment, and Fig. 23 is a sectional view taken along the line A-A in Fig. 22.
As shown in Fig. 22, in this fifth oxidation basin 51-5 according to the fifth embodiment, a weir 69 is provided between the diffuser tubes 52-1 to 52-4 and the diffuser tubes 52-5 to 52-8.

As shown in Fig. 22, in the fifth oxidation basin 51-5 according to the present embodiment, the weir 69 is provided therein so that the four diffuser tubes 52-1 to 52-4 are provided on one side of the weir 69. The diffuser tubes 52-1 and 52-2 are arranged in parallel to each other with a predetermined distance therebetween perpendicular to the shaft direction of the sub tubes 62a-1 and 62a-2. The branch tubes 62b-1 and 62b-2 are offset to each other. Similar to the diffuser tubes 52-1 and 52-2, diffuser tubes 52-3 and 52-4 are arranged in parallel to each other with a predetermined distance therebetween perpendicular to the shaft direction of the sub tubes 62a-3 and 62a-4, and the branch tubes 62b-3 and 62b-4 are offset to each other. On the other side of the weir 69, the diffuser tubes 52-5 to 52-8 are arranged, similarly to the diffuser tubes 52-1 to 52-4. The diffuser tubes 52-5 and 52-6 are arranged in parallel to each other with a predetermined distance therebetween perpendicular to the shaft direction of the sub tubes 62a-5 and 62a-6, and the branch tubes 62b-5 and 62b-6 are offset to each other. The diffuser tubes 52-7 and 52-8 are arranged in parallel to each other with a predetermined distance therebetween perpendicular to the shaft direction of the sub tubes 62a-7 and 62a-8, and the branch tubes 62b-7 and 62b-8 are offset to each other.
The air 29 is supplied into the two diffuser tubes 52-1 and 52-2 through the main tube 61-1. The air 29 is supplied into the two diffuser tubes 52-3 and 52-4 through the main tube 61-2. The air 29 is supplied into the two diffuser tubes 52-5 and 52-6 through the main tube 61-3. The air 29 is supplied into the two diffuser tubes 52-7 and 52-8 through the main tube 61-4

The diffuser tubes 52-1 to 52-4 are provided on one side of the weir 69 and the diffuser tubes 52-5 to 52-8 are provided on the other side of the weir 69 so that four diffuser tubes are provided on each side of the weir 69. The present invention is not, however, limited thereto. The number of the diffuser tubes may be adjusted according to the size of the oxidation basin.

In the fifth oxidation basin 51-5 according to the present embodiment, because the weir 69 between the diffuser tubes 52-1 to 52-4 and the diffuser tubes 52-5 to 52-8 is provided as shown in Fig. 23, convection flow can be produced on the both sides of the weir 69. Therefore, the sulfur-content absorbing seawater 16B and the air 29 can be more efficiently brought into gas-liquid contact with each other.

In the fifth oxidation basin according to the present embodiment, the weir 69 is provided for every two diffuser tubes 52-1 and 52-2 located in the perpendicular direction of the shaft direction of the sub tubes 62a-1 and 62a-2. The present invention is not, however, limited thereto. Alternatively, the weir 69 may be provided to each of the diffuser tubes 52-1 and 52-2.

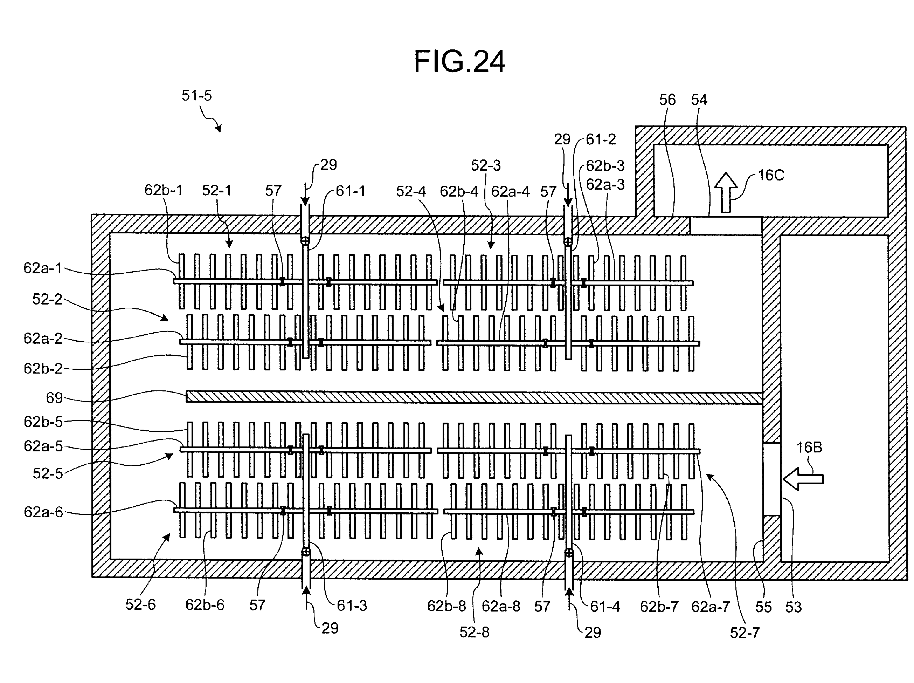

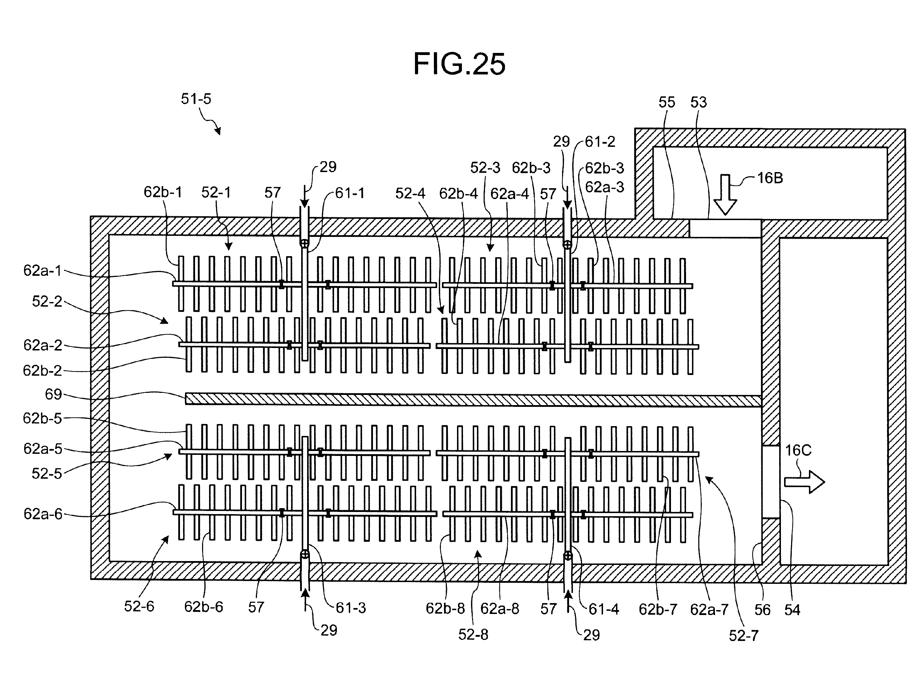

In the present embodiment, the inlet 53 and the outlet 54 are provided on the same wall of the fifth oxidation basin 51-5. The present invention is not, however, limited thereto. Figs. 24 and 25 are schematics of other configurations of the oxidation basin. As shown in Figs. 24 and 25, the outlet 54 may be provided on any of the walls of the fifth oxidation basin 51-5 that is next to the wall on which the inlet 53 is provided.

### INDUSTRIAL APPLICABILITY

As described above, the oxidation basin according to the present invention is useful in efficiently supplying air into seawater, and is preferably applied to an oxidation basin in which air is supplied to seawater containing sulfur content used for seawater desulfurization.

### EXPLANATIONS OF LETTERS OR NUMERALS

- 11: air
- 12: boiler
- 13: flue gas
- 14: dust collecting apparatus
- 15, 15A: seawater
- 15B: first dilution seawater
- 15C: second dilution seawater
- 16A to 16C: sulfur-content absorbing seawater
- 20: flue-gas desulfurization absorption tower
- 21: induction fan
- 22: sea
- 23, 24: pump
- 25: purged gas
- 26: stack
- 27: oxidation basin inflow seawater
- 28: oxidation air blower
- 29: air
- 31: water-quality restored seawater
- 40: seawater desulfurization system
- 41: air preheater (AH)
- 42: steam
- 43: power generator
- 44: steam turbine
- 45: water
- 46: condenser
- 47: flue-gas denitration apparatus
- 48: seawater desulfurization/oxidation treatment apparatus
- 49: forced draft fan
- 50: heat exchanger
- 51-1: first oxidation basin
- 51-2A, 51-2B: second oxidation basin
- 51-3: third oxidation basin
- 51-4: fourth oxidation basin
- 51-5: fifth oxidation basin
- 51a: main body
- 52, 52-1 to 52-8: diffuser tube
- 53: inlet
- 54: outlet
- 55: inflow plate
- 56: outflow plate
- 57: valve
- 61, 61-1 to 61-4: main tube
- 62, 62-1, 62-2: air tube
- 62a, 62a-1 to 62a-8: sub tube
- 62b, 62b-1 to 62b-8: branch tube
- 64: tube body
- 65: porous membrane
- 66: pore
- 67: micropore
- 68: partition plate
- 69: weir
- L1: seawater supply line
- L2: purged-gas discharge line
- L3: sulfur-content absorbing seawater discharge line
- L4: first seawater branching line
- L5: second seawater branching line
- L6: seawater discharge line

## Claims

1. An oxidation basin that includes a diffuser tube that supplies air to a sulfur-content absorbing solution that is produced when sulfur content contained in a flue gas is brought into contact with seawater to perform seawater desulfurization, and performs a water-quality restoring treatment of the sulfur-content absorbing solution, the oxidation basin comprising:
an inlet through which the sulfur-content absorbing solution flows into a side of the diffuser tube; and
an outlet through which the sulfur-content absorbing solution flows out after being brought into contact with the air supplied through the diffuser tube, wherein
the diffuser tube includes a main tube that supplies the air an air tube that extends from the main tube,
the air tube includes a sub tube that is connected to the main tube and extends in a certain direction, and a plurality of branch tubes that is connected to the sub tube and extends in a direction different from the direction in which the sub tube extends, and
the branch tubes are arranged so as to be generally perpendicular to a direction in which the sulfur-content absorbing solution flows.

2. The oxidation basin according to claim wherein each of the branch tubes includes a tube body and a porous membrane that covers a surface of the tube body.

3. The oxidation basin according to claim 1 or 2, wherein each of the branch tubes is a flat plate, and has a longitudinal shape whose both ends are rectangular shaped or arc shaped.

4. The oxidation basin according to claim 1 or 2, wherein a cross section of each of the branch tubes cut perpendicularly to a longitudinal direction of the branch tube is circular shaped.

5. The oxidation basin according to any one of claims 1 to 4, wherein two or more air tubes are arranged with a predetermined distance therebetween.

6. The oxidation basin according to claim 5, wherein the air tubes are arranged in parallel to each other, and the branch tubes of the air tubes are offset to each other.

7. The oxidation basin according to claim 6, wherein between the branch tubes on one side, the branch tubes of the diffuser tube on another side next thereto are interleaved.

8. The oxidation basin according to any one of claims 5 to 7, wherein a partition plate is provided between the diffuser tubes in the oxidation basin.

9. The oxidation basin according to any one of claims 5 to 7, wherein a weir is provided between the diffuser tubes in the oxidation basin.

10. The oxidation basin according to any one of claims 1 to 9, wherein the seawater is an effluent discharged from a condenser.

11. A seawater treatment apparatus comprising:
a flue-gas desulfurization apparatus that washes a sulfur content contained in a flue gas by bringing the sulfur content into contact with seawater; and
the oxidation basin according to any one of claims 1 to 10.

12. A seawater desulfurization system comprising:
a boiler;
a steam turbine that uses a flue gas discharged from the boiler as a heat source for generating steam, and drives a power generator by using the steam thus generated;
a condenser that collects water that is condensed in the steam turbine, and circulates the water;
a flue-gas denitration apparatus that performs denitration of the flue gas discharged from the boiler;
a dust collecting apparatus that reduces ash dust contained in the flue gas;
the seawater treatment apparatus according to claim 11; and
a stack that discharges purged gas that is subjected to desulfurization in the flue-gas desulfurization apparatus outside.
